(19) Europäisches Patentamt
European Patent Office
Office européen des brevets

(11) **EP 4 586 525 A1**

(12) **EUROPEAN PATENT APPLICATION**
published in accordance with Art. 153(4) EPC

(43) Date of publication:
**16.07.2025 Bulletin 2025/29**

(21) Application number: **23870879.6**

(22) Date of filing: **26.09.2023**

(51) International Patent Classification (IPC):
***H04L 1/00*** *(2006.01)*

(52) Cooperative Patent Classification (CPC):
**H04L 1/00; H04L 5/00; H04W 28/06**

(86) International application number:
**PCT/CN2023/121809**

(87) International publication number:
**WO 2024/067652 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211213854**

(71) Applicant: **Huawei Technologies Co., Ltd.
Shenzhen, Guangdong 518129 (CN)**

(72) Inventors:
• **ZHANG, Zhening
Shenzhen, Guangdong 518129 (CN)**
• **GAO, Xiang
Shenzhen, Guangdong 518129 (CN)**
• **LIU, Xianda
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD, COMMUNICATION APPARATUS, CHIP, AND COMPUTER READABLE STORAGE MEDIUM**

(57) This application discloses a communication method, a communication apparatus, a chip, and a computer-readable storage medium. The method includes: A first communication apparatus receives first information; the first communication apparatus determines a cyclic shift range of a first port based on the first information, where the first port is one of ports (for example, SRS ports) corresponding to the first communication apparatus, and the cyclic shift range of the first port includes two or more cyclic shift values; and the first communication apparatus sends a reference signal on the first port, where a cyclic shift value occupied by the first port changes with a sending moment and/or a sending frequency of the reference signal (for example, an SRS), and the cyclic shift value occupied by the first port belongs to the cyclic shift range of the first port. This can ensure that channel estimation performance is not degraded when fully utilizing an interference randomization effect brought by cyclic shift hopping.

FIG. 4

**Description**

This application claims priority to Chinese Patent Application No. 202211213854.9, filed with the China National Intellectual Property Administration on September 30, 2022 and entitled "COMMUNICATION METHOD, COMMUNICATION APPARATUS, CHIP, AND COMPUTER-READABLE STORAGE MEDIUM", which is incorporated herein by reference in its entirety.

**TECHNICAL FIELD**

This application relates to the communication field, and in particular, to a communication method, a communication apparatus, a chip, and a computer-readable storage medium.

**BACKGROUND**

A sounding reference signal (sounding reference signal, SRS) is an uplink reference signal sent by a terminal device to an access network device (for example, a base station). The SRS is used by the access network device to obtain an uplink (uplink, UL) channel of the terminal device. Alternatively, the SRS is used by the access network device to obtain a downlink (downlink, DL) channel of the terminal device based on channel reciprocity, to perform data scheduling on the terminal device based on the downlink channel.

A sequence (that is, an SRS sequence) used by an SRS in a long term evolution (long term evolution, LTE) system and a new radio (new radio, NR) is a cyclic shift (cyclic shift, CS) of a base sequence (base sequence). SRS sequences used by different terminal devices may be CSs of different base sequences, or may be different CSs of a same base sequence. For different base sequences, regardless of whether a same cyclic shift value or different cyclic shift values are used, interference exists between obtained SRS sequences. In other words, if the access network device allocates, to different terminal devices, SRS sequences obtained based on a same cyclic shift value or different cyclic shift values of different base sequences, and the terminal devices send, on a same time-frequency resource, the SRS sequences respectively allocated to the terminal devices, interference between the SRS sequences causes interference between the terminal devices.

Because interference between two SRS sequences is affected by a difference between cyclic shifts of the two SRS sequences, currently, interference between SRS sequences is randomized through cyclic shift hopping. The interference between the SRS sequences can be randomized through cyclic shift hopping to achieve a better interference randomization effect. In an actual application scenario, there are both a terminal device that supports cyclic shift hopping and a terminal device that does not support cyclic shift hopping. When the access network device configures, on a same comb for multiplexing, an SRS port corresponding to a terminal device that supports cyclic shift hopping and an SRS port corresponding to a terminal device that does not support cyclic shift hopping, channel estimation performance of the two terminal devices may be severely degraded. How to ensure that channel estimation performance is not degraded in the foregoing case when fully utilizing an interference randomization effect brought by cyclic shift hopping is an urgent problem to be resolved.

**SUMMARY**

Embodiments of this application disclose a communication method, a communication apparatus, a chip, and a computer-readable storage medium, to ensure that channel estimation performance is not degraded when fully utilizing an interference randomization effect brought by cyclic shift hopping.

According to a first aspect, an embodiment of this application provides a communication method. The method includes: A first communication apparatus receives first information; the first communication apparatus determines a cyclic shift range of a first port based on the first information, where the first port is one of ports corresponding to the first communication apparatus, and the cyclic shift range of the first port includes two or more cyclic shift values; and the first communication apparatus sends a reference signal on the first port. Optionally, a cyclic shift value occupied by the first port changes with a sending moment and/or a sending frequency of the reference signal, and the cyclic shift value occupied by the first port belongs to the cyclic shift range of the first port. The first port may be one of several SRS ports included in an SRS resource in an SRS resource set. The cyclic shift value occupied by the first port is a cyclic shift value occupied when the first communication apparatus sends the reference signal on the first port. In this application, the cyclic shift range of the first port may be understood as a cyclic shift range available to the first port. In other words, the first port may use any cyclic shift value in the cyclic shift range of the first port. The cyclic shift range of the first port may be a proper subset of a first cyclic shift range. If a cyclic shift value used by the first communication apparatus jumps within the first cyclic shift range, interference with an SRS sequence of another communication apparatus may be caused. If a cyclic shift value used by the first communication apparatus jumps within the cyclic shift range of the first port, interference with an SRS sequence of another communication apparatus can be avoided or reduced. The first cyclic shift range may be considered as a cyclic shift range available to an existing communication apparatus that supports cyclic shift hopping. A granularity of a cyclic shift value in the cyclic shift range of the first port and a granularity of a cyclic shift value in the first cyclic shift range are not limited in this application. For example, the first cyclic shift range may be $[0, 2\pi]$ (corresponding to an entire delay domain), may be $\left\{0, 1 \cdot 2\pi/\left(c \cdot n_{\text{SRS}}^{\text{cs,max}}\right), \cdots, \left(c \cdot n_{\text{SRS}}^{\text{cs,max}} - 1\right) \cdot 2\pi/\left(c \cdot n_{\text{SRS}}^{\text{cs,max}}\right)\right\}$ (the entire delay domain is equally

divided into $c \cdot n_{\text{SRS}}^{\text{cs,max}}$ parts), may be $\{0, 1\cdot 2\pi/M_{ZC}, \cdots, (M_{ZC}\text{-}1)\cdot 2\pi/M_{ZC}\}$ the entire delay domain is divided into $M_{ZC}$

equal parts), or may include another value, where c represents a positive integer constant, $n_{\text{SRS}}^{\text{cs,max}}$ represents a maximum cyclic shift quantity, and $M_{ZC}$ represents a length of an SRS sequence. In this embodiment of this application, the first communication apparatus determines the cyclic shift range of the first port based on the first information. When the first port corresponding to the first communication apparatus occupies any cyclic shift value in the cyclic shift range to send the reference signal, the following problem can be avoided or mitigated: when an SRS port corresponding to a terminal device that supports cyclic shift hopping and an SRS port corresponding to a terminal device that does not support cyclic shift hopping are configured on a same comb for multiplexing, channel estimation performance of the two terminal devices may be severely degraded. In other words, the first communication apparatus determines the cyclic shift range of the first port based on the first information, to ensure that channel estimation performance is not degraded when fully utilizing an interference randomization effect brought by cyclic shift hopping.

In a possible implementation, a difference between any cyclic shift value in the cyclic shift range of the first port and any cyclic shift value used by an SRS port corresponding to a terminal device that does not support cyclic shift hopping is greater than a first threshold. The first threshold is not limited.

A delay domain channel corresponding to an SRS port includes a plurality of delay paths. When an SRS port corresponding to a terminal device that supports cyclic shift hopping and an SRS port corresponding to a terminal device that does not support cyclic shift hopping are configured on a same comb for multiplexing, an excessively small cyclic shift difference (that is, a difference between a cyclic shift value occupied by the SRS port corresponding to the terminal device that supports cyclic shift hopping and a cyclic shift value occupied by the SRS port corresponding to the terminal device that does not support cyclic shift hopping) or even a same cyclic shift value causes delay domain channels corresponding to the two terminal devices to overlap, and channel estimation performance of both terminal devices is severely degraded. In this implementation, a difference between any cyclic shift value in the cyclic shift range of the first port and a cyclic shift value occupied by an SRS port corresponding to a terminal device that does not support cyclic shift hopping is greater than the first threshold, so that overlapping between a delay domain channel corresponding to the first port and a delay domain channel corresponding to the SRS port corresponding to the terminal device that does not support cyclic shift hopping can be avoided or reduced, thereby ensuring that channel estimation performance is not degraded.

In a possible implementation, the first information indicates a first interval length, and the cyclic shift range of the first port is jointly determined by a cyclic shift value configured for the first port and the first interval length.

In this implementation, the first information indicates the first interval length. The first communication apparatus may quickly and accurately determine the cyclic shift range of the first port based on the first information and the cyclic shift value configured for the first port.

In a possible implementation, the first information indicates a port quantity, a comb quantity, a cyclic shift reference index, and a first interval length; and that the first communication apparatus determines a cyclic shift range of a first port based on the first information includes: The first communication apparatus determines a maximum cyclic shift quantity based on the comb quantity; determines, based on the port quantity, the cyclic shift reference index, and the maximum cyclic shift quantity, a cyclic shift value configured for the first port; and determines the cyclic shift range of the first port based on the cyclic shift value configured for the first port and the first interval length.

In this implementation, the first communication apparatus determines the cyclic shift range of the first port based on the first information, to ensure that channel estimation performance is not degraded when fully utilizing an interference randomization effect brought by cyclic shift hopping.

In a possible implementation, the first information indicates a port quantity, a comb quantity, a cyclic shift reference index, and a first scale factor; and that the first communication apparatus determines a cyclic shift range of a first port based on the first information includes: The first communication apparatus determines a maximum cyclic shift quantity based on the comb quantity; determines, based on the port quantity, the cyclic shift reference index, and the maximum cyclic shift quantity, a cyclic shift value configured for the first port; and determines the cyclic shift range of the first port based on the cyclic shift value configured for the first port, the first scale factor, and the maximum cyclic shift quantity. That the first information indicates the port quantity, the comb quantity, the cyclic shift reference index, and the first scale factor may be replaced with the following: The first information indicates the port quantity, the comb quantity, and the cyclic shift reference index, and the first scale factor is predefined, that is, the first information does not need to indicate the first scale factor.

In this implementation, the first communication apparatus determines the cyclic shift range of the first port based on the first information, to ensure that channel estimation performance is not degraded when fully utilizing an interference randomization effect brought by cyclic shift hopping.

In a possible implementation, the first information indicates a port quantity, a comb quantity, a cyclic shift reference index, and a first scale factor; and that the first communication apparatus determines a cyclic shift range of a first port based on the first information includes: The first communication apparatus determines a maximum cyclic shift quantity based on the comb quantity; determines, based on the port quantity, the cyclic shift reference index, and the maximum cyclic shift quantity, a cyclic shift value configured for the first port; determines a first interval length based on the first scale factor and the maximum cyclic shift quantity; and determines the cyclic shift range of the first port based on the cyclic shift value configured for the first port and the first interval length. That the first information indicates the port quantity, the comb quantity, the cyclic shift reference index, and the first scale factor may be replaced with the following: The first information indicates the port quantity, the comb quantity, and the cyclic shift reference index, and the first scale factor is predefined, that is, the first information does not need to indicate the first scale factor.

In this implementation, the first communication apparatus determines the cyclic shift range of the first port based on the first information, to ensure that channel estimation performance is not degraded when fully utilizing an interference randomization effect brought by cyclic shift hopping.

In a possible implementation, the cyclic shift range of the first port is $\left[2\pi \frac{n_{SRS}^{cs,i}}{n_{SRS}^{cs,max}}, 2\pi \frac{n_{SRS}^{cs,i}+\beta}{n_{SRS}^{cs,max}}\right]$, where $n_{SRS}^{cs,i}$ represents the cyclic shift value configured for the first port, $n_{SRS}^{cs,max}$ represents the maximum cyclic shift quantity, $2\pi \frac{\beta}{n_{SRS}^{cs,max}}$ represents the first interval length, and $\beta$ represents the first scale factor. Optionally, $\beta > 0$ is the first scale factor that is predefined or indicated by an access network device (for example, a base station) by using the first information.

In this implementation, the cyclic shift range of the first port is $\left[2\pi \frac{n_{SRS}^{cs,i}}{n_{SRS}^{cs,max}}, 2\pi \frac{n_{SRS}^{cs,i}+\beta}{n_{SRS}^{cs,max}}\right]$, and the first port sends the reference signal by using a cyclic shift value within the cyclic shift range, to ensure that channel estimation performance is not degraded when fully utilizing an interference randomization effect brought by cyclic shift hopping.

In a possible implementation, the first information indicates a first set, the first set includes a cyclic shift index unavailable to the first port, and the cyclic shift range of the first port is determined by the first set.

In this implementation, the cyclic shift range of the first port is determined by the first set, so that the cyclic shift range of the first port can be accurately determined.

In a possible implementation, the first information indicates a first set and a comb quantity, the first set includes a cyclic shift index unavailable to the first port, and the cyclic shift range of the first port is jointly determined by the first set and the comb quantity. Optionally, that the first communication apparatus determines a cyclic shift range of a first port based on the first information includes: The first communication apparatus determines a maximum cyclic shift quantity based on the comb quantity; and determines the cyclic shift range of the first port based on the maximum cyclic shift quantity and the first set.

In this implementation, the cyclic shift range of the first port is jointly determined by the first set and the comb quantity, so that the cyclic shift range of the first port can be accurately determined.

In a possible implementation, the first information indicates a first set, a comb quantity, and a second scale factor, the first set includes a cyclic shift index unavailable to the first port, and the cyclic shift range of the first port is jointly determined by the first set, the comb quantity, and the second scale factor. Optionally, that the first communication apparatus determines a cyclic shift range of a first port based on the first information includes: The first communication apparatus determines a maximum cyclic shift quantity based on the comb quantity; and determines the cyclic shift range of the first port based on the maximum cyclic shift quantity, the first set, and the second scale factor. That the first information indicates the first set, the comb quantity, and the second scale factor may be replaced with the following: The first information indicates the first set and the comb quantity, and the second scale factor is predefined, that is, the first information does not need to indicate the second scale factor.

In this implementation, the cyclic shift range of the first port is jointly determined by the first set, the comb quantity, and the second scale factor, so that the cyclic shift range of the first port can be accurately determined.

In a possible implementation, a formula for determining, by the first communication apparatus, the cyclic shift range of the first port is as follows:

$$\bigcup_{j=0}^{n_{\mathrm{SRS}}^{\mathrm{cs,max}}-1}\left[2\pi\frac{j}{n_{\mathrm{SRS}}^{\mathrm{cs,max}}},\ 2\pi\frac{j+\gamma}{n_{\mathrm{SRS}}^{\mathrm{cs,max}}}\right],\ s.t.\ B(j)=0 \qquad (1)$$

$\bigcup_{j=0}^{n_{\mathrm{SRS}}^{\mathrm{cs,max}}-1}\left[2\pi\frac{j}{n_{\mathrm{SRS}}^{\mathrm{cs,max}}},\ 2\pi\frac{j+\gamma}{n_{\mathrm{SRS}}^{\mathrm{cs,max}}}\right]$ represents the cyclic shift range of the first port, j represents the cyclic shift index, $n_{\mathrm{SRS}}^{\mathrm{cs,max}}$ represents the maximum cyclic shift quantity, $\gamma$ is the second scale factor, $B(j) = 1$ represents that the cyclic shift index $j$ is already occupied by an SRS port that does not support cyclic shift hopping, and $B(j) = 0$ represents that the cyclic shift index $j$ is not occupied by an SRS port that does not support cyclic shift hopping (which may be occupied by an SRS port that supports cyclic shift hopping, or may not be occupied by any SRS port). Optionally, $0 \leq \gamma \leq 1$ is the second scale factor that is predefined or indicated by an access network device (for example, a base station) by using the first information.

In this implementation, the cyclic shift range of the first port may be accurately determined by using the formula (1).

In a possible implementation, a formula for determining, by the first communication apparatus, the cyclic shift range of the first port is as follows:

$$\bigcup_{j=0}^{n_{\mathrm{SRS}}^{\mathrm{cs,max}}-1}\left[2\pi\frac{j}{n_{\mathrm{SRS}}^{\mathrm{cs,max}}},\ 2\pi\frac{j+1-\gamma B(j+1)}{n_{\mathrm{SRS}}^{\mathrm{cs,max}}}\right],\ s.t.\ B(j)=0 \qquad (2)$$

$\bigcup_{j=0}^{n_{\mathrm{SRS}}^{\mathrm{cs,max}}-1}\left[2\pi\frac{j}{n_{\mathrm{SRS}}^{\mathrm{cs,max}}},\ 2\pi\frac{j+1-\gamma B(j+1)}{n_{\mathrm{SRS}}^{\mathrm{cs,max}}}\right]$ represents the cyclic shift range of the first port, $j$ represents the cyclic shift index, $n_{\mathrm{SRS}}^{\mathrm{cs,max}}$ represents the maximum cyclic shift quantity, $\gamma$ is the second scale factor, $B(j) = 1$ represents that the cyclic shift index $j$ is already occupied by an SRS port that does not support cyclic shift hopping, and $B(j) = 0$ represents that the cyclic shift index $j$ is not occupied by an SRS port that does not support cyclic shift hopping (which may be occupied by an SRS port that supports cyclic shift hopping, or may not be occupied by any SRS port). Optionally, $0 \leq \gamma \leq 1$ is the second scale factor that is predefined or indicated by an access network device (for example, a base station) by using the first information.

In this implementation, the cyclic shift range of the first port may be accurately determined by using the formula (2).

In a possible implementation, the first information indicates, through a bitmap, the cyclic shift index included in the first set, N bits in the bitmap are in one-to-one correspondence with N cyclic shift indexes, and that a value of any bit in the N bits is 1 or 0 indicates that a cyclic shift index corresponding to the any bit belongs to the first set. N is an integer greater than 1. N may be $n_{\mathrm{SRS}}^{\mathrm{cs,max}}$, or may be another value. $n_{\mathrm{SRS}}^{\mathrm{cs,max}}$ represents a maximum cyclic shift quantity.

In this implementation, the first information indicates, through a bitmap, the cyclic shift index included in the first set, so that the cyclic shift index included in the first set can be accurately indicated.

In a possible implementation, the first information indicates a second set, the second set includes one or more cyclic shift indexes, the second set is a proper subset of a universal set including all cyclic shift indexes, and the cyclic shift range of the first port is determined by the second set. The one or more cyclic shift indexes included in the second set may be considered as cyclic shift indexes available to the first port.

The universal set including all the cyclic shift indexes may be $\{0, 1, \cdots, c \cdot n_{\mathrm{SRS}}^{\mathrm{cs,max}} - 1\}$, may be $\{0, 1, \cdots, M_{\mathrm{ZC}} - 1\}$, or may include another value, where c represents a positive integer constant, $n_{\mathrm{SRS}}^{\mathrm{cs,max}}$ represents a maximum cyclic shift quantity, and $M_{\mathrm{ZC}}$ represents a length of an SRS sequence.

In this implementation, the cyclic shift range of the first port is determined by the second set, so that the cyclic shift range of the first port can be accurately determined.

In a possible implementation, the first information indicates a second set and a comb quantity, the second set includes one or more cyclic shift indexes, the second set is a proper subset of a universal set including all cyclic shift indexes, and the cyclic shift range of the first port is jointly determined by the second set and the comb quantity. Optionally, that the first communication apparatus determines a cyclic shift range of a first port based on the first information includes: The first communication apparatus determines a maximum cyclic shift quantity based on the comb quantity; and determines the cyclic shift range of the first port based on the maximum cyclic shift quantity and the second set.

In this implementation, the cyclic shift range of the first port is jointly determined by the first set and the comb quantity, so that the cyclic shift range of the first port can be accurately determined.

In a possible implementation, the first information indicates a second set, a comb quantity, and a third scale factor, the second set includes one or more cyclic shift indexes, the second set is a proper subset of a universal set including all cyclic shift indexes, and the cyclic shift range of the first port is jointly determined by the second set, the comb quantity, and the third scale factor. Optionally, that the first communication apparatus determines a cyclic shift range of a first port based on the first information includes: The first communication apparatus determines a maximum cyclic shift quantity based on the comb quantity; and determines the cyclic shift range of the first port based on the maximum cyclic shift quantity, the second set, and the third scale factor. That the first information indicates the second set, the comb quantity, and the third scale factor may be replaced with the following: The first information indicates the second set and the comb quantity, and the third scale factor is predefined, that is, the first information does not need to indicate the third scale factor.

In this implementation, the cyclic shift range of the first port is jointly determined by the first set, the comb quantity, and the third scale factor, so that the cyclic shift range of the first port can be accurately determined.

In a possible implementation, a formula for determining, by the first communication apparatus, the cyclic shift range of the first port is as follows:

$$\bigcup_k \left[ 2\pi \frac{k}{n_{\mathrm{SRS}}^{\mathrm{cs,max}}}, 2\pi \frac{k+\delta}{n_{\mathrm{SRS}}^{\mathrm{cs,max}}} \right], s.t.\, k \subset R \qquad (3)$$

$\bigcup_k \left[ 2\pi \dfrac{k}{n_{\mathrm{SRS}}^{\mathrm{cs,max}}}, 2\pi \dfrac{k+\delta}{n_{\mathrm{SRS}}^{\mathrm{cs,max}}} \right]$ represents the cyclic shift range of the first port, $R$ represents the second set, $k$ represents the cyclic shift index included in the second set, $n_{\mathrm{SRS}}^{\mathrm{cs,max}}$ represents the maximum cyclic shift quantity, and $\delta$ represents the third scale factor. Optionally, $0 \le \delta \le 1$ is the third scale factor that is predefined or indicated by an access network device (for example, a base station) by using the first information.

In this implementation, the cyclic shift range of the first port may be accurately determined by using the formula (3).

In a possible implementation, the universal set including all the cyclic shift indexes is divided into $\varepsilon$ predefined proper subsets, the second set is one of the $\varepsilon$ proper subsets, the first information indicates the second set, and the cyclic shift range of the first port is determined by the second set, where $\varepsilon$ is an integer greater than 1. Optionally, the universal set including all the cyclic shift indexes may be equally divided into the $\varepsilon$ predefined proper subsets at intervals of $\varepsilon$, or may be equally divided into the $\varepsilon$ predefined proper subsets consecutively.

In this implementation, the second set indicated by the first information is one of several predefined proper subsets, and the cyclic shift range of the first port may be determined with relatively small overheads.

In a possible implementation, the first information indicates, through a bitmap, the cyclic shift index included in the second set, N bits in the bitmap are in one-to-one correspondence with N cyclic shift indexes, and that a value of any bit in the N bits is 1 or 0 indicates that a cyclic shift index corresponding to the any bit belongs to the second set. N is an integer greater than 1. N may be $c \cdot n_{\mathrm{SRS}}^{\mathrm{cs,max}}$, may be $M_{\mathrm{ZC}}$, or may be another value, where $c$ represents a positive integer constant, $n_{\mathrm{SRS}}^{\mathrm{cs,max}}$ represents a maximum cyclic shift quantity, and $M_{\mathrm{ZC}}$ represents a length of an SRS sequence. The maximum cyclic shift quantity exists in this implementation, and the first information indicates, through a bitmap, the cyclic shift index included in the second set, so that the cyclic shift index included in the second set can be accurately indicated.

In a possible implementation, that the cyclic shift range of the first port is determined by the second set includes: the cyclic shift range of the first port is a cyclic shift value corresponding to a cyclic shift index in the second set.

In this implementation, the cyclic shift value corresponding to the cyclic shift index in the second set is used as the cyclic shift range of the first port, to ensure that channel estimation performance is not degraded when fully utilizing an interference randomization effect brought by cyclic shift hopping.

In a possible implementation, the first port is one of several SRS ports included in an SRS resource in an SRS resource set, and the first communication apparatus supports cyclic shift hopping.

In this implementation, the first port is an SRS port, to ensure that channel estimation performance is not degraded when fully utilizing an interference randomization effect brought by cyclic shift hopping.

In a possible implementation, the first information is carried on one or more pieces of signaling in a same format and/or different formats.

In this implementation, the first information is carried on one or more pieces of signaling in a same format and/or different formats, so that configuration flexibility can be improved.

According to a second aspect, an embodiment of this application provides another communication method. The method includes: A first communication apparatus receives first information; the first communication apparatus determines, based on the first information, a cyclic shift change pattern corresponding to a first port, where the first port is one of ports corresponding to the first communication apparatus, and a set including cyclic shift indexes included in the cyclic shift change pattern corresponding to the first port is a proper subset of a universal set including all cyclic shift indexes; and the first communication apparatus sends a reference signal on the first port. Optionally, a cyclic shift value occupied by the first port changes with a sending moment and/or a sending frequency of the reference signal, and the cyclic shift change pattern corresponding to the first port is used to represent a relationship between the cyclic shift value occupied by the first port and the sending moment and/or the sending frequency of the reference signal. The first port may be one of several SRS ports included in an SRS resource in an SRS resource set. The cyclic shift value occupied by the first port is a cyclic shift value occupied when the first communication apparatus sends the reference signal on the first port. In this application, the cyclic shift change pattern corresponding to the first port may be understood as a pattern in which a change rule is the same as a rule based on which the cyclic shift value occupied by the first port changes with an SRS sending moment and/or sending frequency. In other words, the first port changes, based on the cyclic shift change pattern corresponding to the first port, the cyclic shift value occupied by the first port with the SRS sending moment and/or sending frequency. The universal set including all the cyclic shift indexes is not limited in this application. For example, the universal set including all the cyclic shift indexes may be $\left\{0, 1, \cdots, c \cdot n_{\mathrm{SRS}}^{\mathrm{cs,max}} - 1\right\}$, may be $\{0, 1, \cdots, M_{\mathrm{ZC}} - 1\}$, or may include another value, where c represents a positive integer constant, $n_{\mathrm{SRS}}^{\mathrm{cs,max}}$ represents a maximum cyclic shift quantity, and $M_{\mathrm{ZC}}$ represents a length of an SRS sequence.

In this embodiment of this application, the first communication apparatus determines, based on the first information, the cyclic shift change pattern corresponding to the first port. When the first port corresponding to the first communication apparatus occupies a cyclic shift based on the cyclic shift change pattern to send the reference signal, the following problem can be avoided or mitigated: when an SRS port corresponding to a terminal device that supports cyclic shift hopping and an SRS port corresponding to a terminal device that does not support cyclic shift hopping are configured on a same comb for multiplexing, channel estimation performance of the two terminal devices may be severely degraded. In other words, the first communication apparatus determines, based on the first information, the cyclic shift change pattern corresponding to the first port, to ensure that channel estimation performance is not degraded when fully utilizing an interference randomization effect brought by cyclic shift hopping.

According to a third aspect, an embodiment of this application provides another communication method. The method includes: generating first information; sending the first information, where the first information is used to indicate a cyclic shift range of a first port, the first port is one of ports corresponding to a first communication apparatus, and the cyclic shift range of the first port includes two or more cyclic shift values; and receiving a reference signal on the first port, where a cyclic shift value occupied by the first port changes with a sending moment and/or a sending frequency of the reference signal, and the cyclic shift value occupied by the first port belongs to the cyclic shift range of the first port.

In this embodiment of this application, the first information is used to indicate the cyclic shift range of the first port. When the first communication apparatus occupies any cyclic shift value in the cyclic shift range to send the reference signal, the following problem can be avoided or mitigated: when an SRS port corresponding to a terminal device that supports cyclic shift hopping and an SRS port corresponding to a terminal device that does not support cyclic shift hopping are configured on a same comb for multiplexing, channel estimation performance of the two terminal devices may be severely degraded. In other words, the first communication apparatus determines the cyclic shift range of the first port based on the first information, to ensure that channel estimation performance is not degraded when fully utilizing an interference randomization effect brought by cyclic shift hopping.

In a possible implementation, a difference between any cyclic shift value in the cyclic shift range of the first port and any cyclic shift value used by a terminal device that does not support cyclic shift hopping is greater than a first threshold. The first threshold is not limited. The first port may be one of several SRS ports included in an SRS resource in an SRS resource set.

In this implementation, a difference between any cyclic shift value in the cyclic shift range of the first port and any cyclic shift value used by a terminal device that does not support cyclic shift hopping is greater than the first threshold, so that overlapping between a delay domain channel corresponding to the first port and a delay domain channel corresponding to the SRS port corresponding to the terminal device that does not support cyclic shift hopping can be avoided or reduced, thereby ensuring that channel estimation performance is not degraded.

In a possible implementation, the first information indicates a first interval length, and the cyclic shift range of the first port is jointly determined by a cyclic shift value configured for the first port and the first interval length.

In this implementation, the first information indicates the first interval length. The first communication apparatus may quickly and accurately determine the cyclic shift range of the first port based on the first information.

In a possible implementation, the first information indicates a port quantity, a comb quantity, a cyclic shift reference index, and a first interval length, and the cyclic shift range of the first port is jointly determined by the port quantity, the comb quantity, the cyclic shift reference index, and the first interval length. Optionally, the comb quantity is used to determine a maximum cyclic shift quantity, the port quantity, the cyclic shift reference index, and the maximum cyclic shift quantity are used to determine a cyclic shift value configured for the first port, and the maximum cyclic shift quantity, the cyclic shift value configured for the first port, and the first interval length are used to determine the cyclic shift range of the first port.

In this implementation, the first information indicates the port quantity, the comb quantity, the cyclic shift reference index, and the first interval length, so that the first communication apparatus can determine the cyclic shift range of the first port.

In a possible implementation, the first information indicates a port quantity, a comb quantity, a cyclic shift reference index, and a first scale factor, and the cyclic shift range of the first port is jointly determined by the port quantity, the comb quantity, the cyclic shift reference index, and the first scale factor. Optionally, the comb quantity is used to determine a maximum cyclic shift quantity, the port quantity, the cyclic shift reference index, and the maximum cyclic shift quantity are used to determine a cyclic shift value configured for the first port, and the maximum cyclic shift quantity, the cyclic shift value configured for the first port, and the first scale factor are used to determine the cyclic shift range of the first port. That the first information indicates the port quantity, the comb quantity, the cyclic shift reference index, and the first scale factor may be replaced with the following: The first information indicates the port quantity, the comb quantity, and the cyclic shift reference index, and the first scale factor is predefined, that is, the first information does not need to indicate the first scale factor.

In this implementation, the first information indicates the port quantity, the comb quantity, the cyclic shift reference index, and the first scale factor, so that the first communication apparatus can determine the cyclic shift range of the first port.

In a possible implementation, the cyclic shift range of the first port is $\left[ 2\pi \dfrac{n_{\mathrm{SRS}}^{\mathrm{cs},i}}{n_{\mathrm{SRS}}^{\mathrm{cs,max}}}, 2\pi \dfrac{n_{\mathrm{SRS}}^{\mathrm{cs},i}+\beta}{n_{\mathrm{SRS}}^{\mathrm{cs,max}}} \right]$, where $n_{\mathrm{SRS}}^{\mathrm{cs},i}$ represents the cyclic shift value configured for the first port, $n_{\mathrm{SRS}}^{\mathrm{cs,max}}$ represents the maximum cyclic shift quantity, $2\pi \dfrac{\beta}{n_{\mathrm{SRS}}^{\mathrm{cs,max}}}$ represents the first interval length, and $\beta$ represents the first scale factor. Optionally, $\beta > 0$ is the first scale factor that is predefined or indicated by an access network device (for example, a base station) by using the first information.

In this implementation, the cyclic shift range of the first port is $\left[ 2\pi \dfrac{n_{\mathrm{SRS}}^{\mathrm{cs},i}}{n_{\mathrm{SRS}}^{\mathrm{cs,max}}}, 2\pi \dfrac{n_{\mathrm{SRS}}^{\mathrm{cs},i}+\beta}{n_{\mathrm{SRS}}^{\mathrm{cs,max}}} \right]$, and the first port sends the reference signal by using a cyclic shift value within the cyclic shift range, to ensure that channel estimation performance is not degraded when fully utilizing an interference randomization effect brought by cyclic shift hopping.

In a possible implementation, the first information is used to indicate a first set, the first set includes a cyclic shift index unavailable to the first port, and the cyclic shift range of the first port is determined by the first set.

In this implementation, the first information is used to indicate the first set, so that the first communication apparatus determines the cyclic shift range of the first port based on the first set.

In a possible implementation, the first information indicates a first set and a comb quantity, the first set includes a cyclic shift index unavailable to the first port, and the cyclic shift range of the first port is jointly determined by the first set and the comb quantity. Optionally, the comb quantity is used to determine a maximum cyclic shift quantity, and the maximum cyclic shift quantity and the first set are used to determine the cyclic shift range of the first port.

In this implementation, the first information indicates the first set and the comb quantity, so that the first communication apparatus determines the cyclic shift range of the first port based on the first information.

In a possible implementation, the first information indicates a first set, a comb quantity, and a second scale factor, the first set includes a cyclic shift index unavailable to the first port, and the cyclic shift range of the first port is jointly determined by the first set, the comb quantity, and the second scale factor. Optionally, the comb quantity is used to determine a maximum cyclic shift quantity, and the maximum cyclic shift quantity, the first set, and the second scale factor are used to determine the cyclic shift range of the first port. That the first information indicates the first set, the comb quantity, and the second scale factor may be replaced with the following: The first information indicates the first set and the comb quantity, and the second scale factor is predefined, that is, the first information does not need to indicate the second scale factor.

In this implementation, the first information indicates the first set, the comb quantity, and the second scale factor, so that the first communication apparatus determines the cyclic shift range of the first port based on the first information.

In a possible implementation, the first information indicates, through a bitmap, the cyclic shift index included in the first set, N bits in the bitmap are in one-to-one correspondence with N cyclic shift indexes, and that a value of any bit in the N bits is 1 or 0 indicates that a cyclic shift index corresponding to the any bit belongs to the first set.

In this implementation, the first information indicates, through a bitmap, the cyclic shift index included in the first set, so that the cyclic shift index included in the first set can be accurately indicated, and a relatively small quantity of bits are occupied.

In a possible implementation, the first information is used to indicate a second set, the second set includes one or more cyclic shift indexes, the second set is a proper subset of a universal set including all cyclic shift indexes, and the cyclic shift range of the first port is determined by the second set.

In this implementation, the first information indicates the second set, so that the first communication apparatus determines the cyclic shift range of the first port based on the second set.

In a possible implementation, the first information indicates a second set, a comb quantity, and a third scale factor, the second set includes one or more cyclic shift indexes, the second set is a proper subset of a universal set including all cyclic shift indexes, and the cyclic shift range of the first port is jointly determined by the second set, the comb quantity, and the third scale factor. Optionally, the comb quantity is used to determine a maximum cyclic shift quantity, and the maximum cyclic shift quantity, the second set, and the third scale factor are used to determine the cyclic shift range of the first port. That the first information indicates the second set, the comb quantity, and the third scale factor may be replaced with the following: The first information indicates the second set and the comb quantity, and the third scale factor is predefined, that is, the first information does not need to indicate the third scale factor.

In this implementation, the first information indicates the second set, the comb quantity, and the third scale factor, so that the first communication apparatus determines the cyclic shift range of the first port based on the second set.

In a possible implementation, the universal set including all the cyclic shift indexes is divided into $\varepsilon$ predefined proper subsets, the second set is one of the $\varepsilon$ proper subsets, the first information indicates the second set, and the cyclic shift range of the first port is determined by the second set, where $\varepsilon$ is an integer greater than 1. Optionally, the universal set including all the cyclic shift indexes may be equally divided into the $\varepsilon$ predefined proper subsets at intervals of $\varepsilon$, or may be consecutively and equally divided into the $\varepsilon$ predefined proper subsets.

In this implementation, the second set indicated by the first information is one of several predefined proper subsets, and the cyclic shift range of the first port may be determined with relatively small overheads.

In a possible implementation, the first information indicates, through a bitmap, the cyclic shift index included in the second set, N bits in the bitmap are in one-to-one correspondence with N cyclic shift indexes, and that a value of any bit in the N bits is 1 or 0 indicates that a cyclic shift index corresponding to the any bit belongs to the second set.

In this implementation, the first information indicates, through a bitmap, the cyclic shift index included in the second set, so that the cyclic shift index included in the second set can be accurately indicated, and a relatively small quantity of bits are occupied.

In a possible implementation, that the cyclic shift range of the first port is determined by the second set includes: the cyclic shift range of the first port is a cyclic shift value corresponding to a cyclic shift index in the second set.

In this implementation, the cyclic shift range of the first port is the cyclic shift value corresponding to the cyclic shift index in the second set, to ensure that channel estimation performance is not degraded when fully utilizing an interference randomization effect brought by cyclic shift hopping.

In a possible implementation, the first port is one of several SRS ports included in an SRS resource in an SRS resource set, and the first communication apparatus supports cyclic shift hopping.

In this implementation, the first port is an SRS port, to ensure that channel estimation performance is not degraded when fully utilizing an interference randomization effect brought by cyclic shift hopping.

In a possible implementation, the first information is carried on one or more pieces of signaling in a same format and/or different formats.

In this implementation, that the first information is carried on one or more pieces of signaling in a same format and/or different formats may be applied to different scenarios.

According to a fourth aspect, an embodiment of this application provides a communication method. The method includes: generating first information, where the first information is used to indicate a cyclic shift change pattern corresponding to a first port, the first port is one of ports corresponding to a first communication apparatus, and a set including cyclic shift indexes included in the cyclic shift change pattern corresponding to the first port is a proper subset of a universal set including all cyclic shift indexes; sending the first information; and receiving a reference signal on the first port, where a cyclic shift value occupied by the first port changes with a sending moment and/or a sending frequency of the reference signal, and the cyclic shift change pattern corresponding to the first port is used to represent a relationship between the cyclic shift value occupied by the first port and the sending moment and/or the sending frequency of the reference signal.

In this embodiment of this application, the first information is used to indicate the cyclic shift change pattern corresponding to the first port. When the first communication apparatus sends the reference signal based on the cyclic shift change pattern, the following problem can be avoided or mitigated: when an SRS port corresponding to a terminal device that supports cyclic shift hopping and an SRS port corresponding to a terminal device that does not support cyclic shift hopping are configured on a same comb for multiplexing, channel estimation performance of the two terminal devices may be severely degraded.

In a possible implementation, the universal set including all the cyclic shift indexes corresponds to a configured maximum cyclic shift index.

In this implementation, the universal set including all the cyclic shift indexes corresponds to the configured maximum cyclic shift index, so that the universal set including all the cyclic shift indexes can be accurately determined.

According to a fifth aspect, an embodiment of this application provides a communication apparatus. The communication apparatus has a function of implementing behavior in the method embodiment in the first aspect. The communication apparatus may be a communication device, or may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. **In** a possible implementation, the communication apparatus includes a processing module and a transceiver module. The transceiver module is configured to receive first information. The processing module is configured to determine a cyclic shift range of a first port based on the first information, where the first port is one of ports corresponding to the first communication apparatus, and the cyclic shift range of the first port includes two or more cyclic shift values. The transceiver module is further configured to send a reference signal on the first port. Optionally, a cyclic shift value occupied by the first port changes with a sending moment and/or a sending frequency of the reference signal, and the cyclic shift value occupied by the first port belongs to the cyclic shift range of the first port.

In a possible implementation, the first information indicates a port quantity, a comb quantity, a cyclic shift reference index, and a first interval length; and the processing module is specifically configured to: determine a maximum cyclic shift quantity based on the comb quantity; determine, based on the port quantity, the cyclic shift reference index, and the maximum cyclic shift quantity, a cyclic shift value configured for the first port; and determine the cyclic shift range of the first port based on the cyclic shift value configured for the first port and the first interval length.

In a possible implementation, the first information indicates a port quantity, a comb quantity, a cyclic shift reference index, and a first scale factor; and the processing module is specifically configured to: determine a maximum cyclic shift quantity based on the comb quantity; determine, based on the port quantity, the cyclic shift reference index, and the maximum cyclic shift quantity, a cyclic shift value configured for the first port; determine a first interval length based on the first scale factor and the maximum cyclic shift quantity; and determine the cyclic shift range of the first port based on the cyclic shift value configured for the first port and the first interval length.

In a possible implementation, the first information indicates a first set, a comb quantity, and a second scale factor, and the first set includes a cyclic shift index unavailable to the first port; and the processing module is specifically configured to: determine a maximum cyclic shift quantity based on the comb quantity; and determine the cyclic shift range of the first port based on the maximum cyclic shift quantity, the first set, and the second scale factor.

In a possible implementation, the processing module is specifically configured to determine the cyclic shift range of the first port by using the foregoing formula (1), formula (2) or formula (3).

In a possible implementation, the first information indicates a second set, a comb quantity, and a third scale factor, the second set includes one or more cyclic shift indexes, and the second set is a proper subset of a universal set including all cyclic shift indexes; and the processing module is specifically configured to: determine a maximum cyclic shift quantity based on the comb quantity; and determine the cyclic shift range of the first port based on the maximum cyclic shift quantity, the second set, and the third scale factor.

For possible implementations of the communication apparatus in the fifth aspect, refer to the possible implementations of the first aspect.

For technical effects achieved by the possible implementations of the fifth aspect, refer to the descriptions of technical effects of the first aspect or the possible implementations of the first aspect.

According to a sixth aspect, an embodiment of this application provides a communication apparatus. The communication apparatus has a function of implementing behavior in the method embodiment in the second aspect. The communication apparatus may be a communication device, or may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to receive first information. The processing module is configured to determine, based on the first information, a cyclic shift change pattern corresponding to a first port, where the first port is one of ports corresponding to the first communication apparatus, and a set including cyclic shift indexes included in the cyclic shift change pattern corresponding to the first port is a proper subset of a universal set including all cyclic shift indexes. The first communication apparatus sends a reference signal on the first port. Optionally, a cyclic shift value occupied by the first port changes with a sending moment and/or a sending frequency of the reference signal, and the cyclic shift change pattern corresponding to the first port is used to represent a relationship between the cyclic shift value occupied by the first port and the sending moment and/or the sending frequency of the reference signal.

For possible implementations of the communication apparatus in the sixth aspect, refer to the possible implementations of the second aspect.

For technical effects achieved by the possible implementations of the sixth aspect, refer to the descriptions of the technical effects of the second aspect or the possible implementations of the second aspect.

According to a seventh aspect, an embodiment of this application provides a communication apparatus. The communication apparatus has a function of implementing behavior in the method embodiment in the third aspect. The communication apparatus may be a communication device, or may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. **In** a possible implementation, the communication apparatus includes a processing module and a transceiver module. The processing module is configured to generate first information. The transceiver module is configured to send the first information, where the first information is used to indicate a cyclic shift range of a first port, the first port is one of ports corresponding to the first communication apparatus, and the cyclic shift range of the first port includes two or more cyclic shift values. The transceiver module is further configured to receive a reference signal on the first port, where a cyclic shift value occupied by the first port changes with a sending moment and/or a sending frequency of the reference signal, and the cyclic shift value occupied by the first port belongs to the cyclic shift range of the first port.

For possible implementations of the communication apparatus in the seventh aspect, refer to the possible implementations of the third aspect.

For technical effects achieved by the possible implementations of the seventh aspect, refer to the descriptions of the technical effects of the third aspect or the possible implementations of the third aspect.

According to an eighth aspect, an embodiment of this application provides a communication apparatus. The communication apparatus has a function of implementing behavior in the method embodiment in the fourth aspect. The communication apparatus may be a communication device, or may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. **In** a possible implementation, the communication apparatus includes a processing module and a transceiver module. The processing module is configured to generate first information, where the first information is used to indicate a cyclic shift change pattern corresponding to a first port, the first port is one of ports corresponding to the first communication apparatus, and a set including cyclic shift indexes included in the cyclic shift change pattern corresponding to the first port is a proper subset of a universal set including all cyclic shift indexes. The transceiver module is configured to send the first information; and receive a reference signal on the first port, where a cyclic shift value occupied by the first port changes with a sending moment and/or a sending frequency of the reference signal, and the cyclic shift change pattern corresponding to the first port is used to represent a relationship between the cyclic shift value occupied by the first port and the sending moment and/or the sending frequency of the reference signal.

For possible implementations of the communication apparatus in the eighth aspect, refer to the possible implementations of the fourth aspect.

For technical effects achieved by the possible implementations of the eighth aspect, refer to the descriptions of the technical effects of the fourth aspect or the possible implementations of the fourth aspect.

According to a ninth aspect, an embodiment of this application provides another communication apparatus. The communication apparatus includes a processor. The processor is coupled to a memory, and the memory is configured to store a program or instructions. When the program or the instructions are executed by the processor, the communication apparatus is enabled to perform the method according to any one of the possible implementations of the first aspect to the fourth aspect.

In this embodiment of this application, in a process of performing the method, a process of sending information (or a signal) in the method may be understood as a process of outputting information based on instructions of the processor. When outputting the information, the processor outputs the information to a transceiver, so that the transceiver transmits the information. After the information is output by the processor, other processing may need to be performed on the information before the information reaches the transceiver. Similarly, when the processor receives input information, the transceiver receives the information, and inputs the information to the processor. Further, after the transceiver receives the information, other processing may need to be performed on the information before the information is input to the processor.

Operations such as sending and/or receiving related to the processor may be generally understood as outputting based on instructions of the processor if there is no special description, or if the operations do not conflict with actual functions or internal logic of the operations in a related description.

In an implementation process, the processor may be a processor specially configured to perform these methods, or may be a processor, for example, a general-purpose processor, that executes computer instructions in a memory to perform these methods. For example, the processor may be further configured to execute the program stored in the memory. When the program is executed, the communication apparatus is enabled to perform the method according to any one of the first aspect or the possible implementations of the first aspect.

In a possible implementation, the memory is located outside the communication apparatus. In a possible implementation, the memory is located inside the communication apparatus.

In a possible implementation, the processor and the memory may alternatively be integrated into one component, that is, the processor and the memory may alternatively be integrated together.

In a possible implementation, the communication apparatus further includes a transceiver. The transceiver is configured to receive a signal, send a signal, or the like.

According to a tenth aspect, this application provides another communication apparatus. The communication apparatus includes a processing circuit and an interface circuit. The interface circuit is configured to obtain data or output data. The processing circuit is configured to perform the corresponding method according to any one of the possible implementations of the first aspect to the fourth aspect.

According to an eleventh aspect, this application provides another chip. The chip includes a processor and a communication interface. The processor reads, by using the communication interface, instructions stored in a memory, to perform the corresponding method according to any one of the possible implementations of the first aspect to the fourth aspect.

According to a twelve aspect, this application provides a computer-readable storage medium. The computer-readable storage medium stores a computer program, and the computer program includes program instructions. When the program instructions are executed, a computer is enabled to perform the method according to any one of the possible implementations of the first aspect to the fourth aspect.

According to a thirteen aspect, this application provides a computer program product. The computer program product includes a computer program, and the computer program includes program instructions. When the program instructions are executed, a computer is enabled to perform the method according to any one of the possible implementations of the first aspect to the fourth aspect.

According to a fourteenth aspect, this application provides a communication system, including the communication apparatus according to any one of the fifth aspect or the possible implementations of the fifth aspect, and the communication apparatus according to any one of the sixth aspect or the possible implementations of the sixth aspect. Alternatively, the communication system includes the communication apparatus according to any one of the seventh aspect or the possible implementations of the seventh aspect, and the communication apparatus according to any one of the eighth aspect or the possible implementations of the eighth aspect.

**BRIEF DESCRIPTION OF DRAWINGS**

To describe the technical solutions in embodiments of this application or in the background more clearly, the following briefly describes the accompanying drawings for describing embodiments of this application or the background.

FIG. 1 shows an example of a comb with three different comb quantities according to this application;
FIG. 2 shows an example of a transmit bandwidth and a frequency hopping bandwidth according to an embodiment of this application;
FIG. 3 shows an example of a wireless communication system according to an embodiment of this application;
FIG. 4 is a flowchart of a communication interaction method according to an embodiment of this application;
FIG. 5 is a diagram of a delay domain channel corresponding to an SRS port according to an embodiment of this application;
FIG. 6 is a diagram of a delay domain channel corresponding to another SRS port according to an embodiment of this application;
FIG. 7 is a flowchart of another communication interaction method according to an embodiment of this application;
FIG. 8 is a diagram of a structure of a communication apparatus 800 according to an embodiment of this application;
FIG. 9 is a diagram of a structure of another communication apparatus 90 according to an embodiment of this application; and
FIG. 10 is a diagram of a structure of another communication apparatus 100 according to an embodiment of this application.

**DESCRIPTION OF EMBODIMENTS**

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

Terms used in the following embodiments of this application are merely intended to describe specific embodiments, but are not intended to limit this application. As used in the specification and the appended claims of this application, the terms "one", "a", "the", "the foregoing", and "this" of singular forms are also intended to include plural expressions, unless opposite indication is explicitly described in the context. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more.

First, some concepts in embodiments of this application are described.

1. SRS, SRS resource, SRS comb (comb), and SRS sending

An SRS is an uplink reference signal sent by a terminal device to an access network device (for example, a base station). The access network device obtains a UL channel of the terminal device based on the SRS sent by the terminal device. Alternatively, the access network device obtains a DL channel of the terminal device based on channel reciprocity, to perform data scheduling on the terminal device based on the DL channel. A user equipment (user equipment, UE) and/or a user in the following may be considered as a terminal device.

An SRS resource is semi-statically configured by an access network device (for example, a base station) by using a higher-layer parameter, including:

$N_{ap}^{SRS} \in \{1,2,4\}$ SRS ports (antenna ports), where $\{p_i\}_{i=0}^{N_{ap}^{SRS}-1}$, $p_i = 1000 + i$, and each SRS port corresponds to a specific time-frequency code resource. In an ideal case, the SRS ports are orthogonal. Each SRS port corresponds to a physical antenna or a virtual antenna of a terminal device.

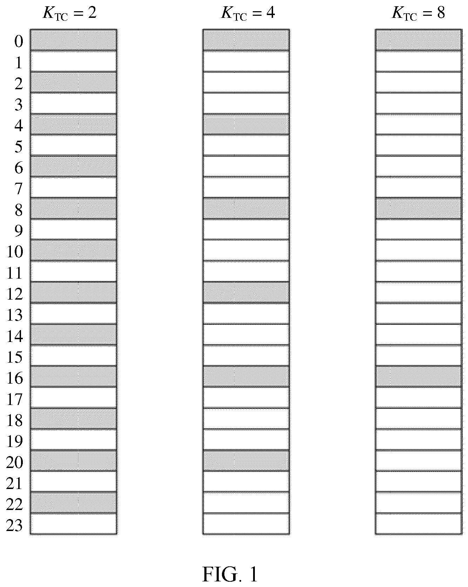

SRS comb (comb): Frequency domain subcarriers on an SRS comb are distributed at equal intervals. A comb quantity $K_{TC} \in \{2,4,8\}$ is semi-statically configured by an access network device (a base station is used as an example below) by using a higher-layer parameter, and determines a quantity of combs included in a transmit bandwidth of an SRS. FIG. 1 shows an example of a comb with three different comb quantities according to this application. In FIG. 1, each grid represents one resource element (resource element, RE), and black grids are examples of RE locations occupied by a comb in a case of different comb quantities. One time of SRS sending corresponds to $R$ consecutive OFDM symbols in an SRS resource. A repetition factor $R \in \{1,2,4\}$ is semi-statically configured by the base station by using a higher-layer parameter *repetitionFactor*. A number, in the SRS resource, of a first OFDM symbol in the $R$ consecutive OFDM symbols corresponding to one time of SRS sending can be exactly divided by $R$.

2. Transmit bandwidth, frequency hopping bandwidth, and frequency hopping periodicity of an SRS

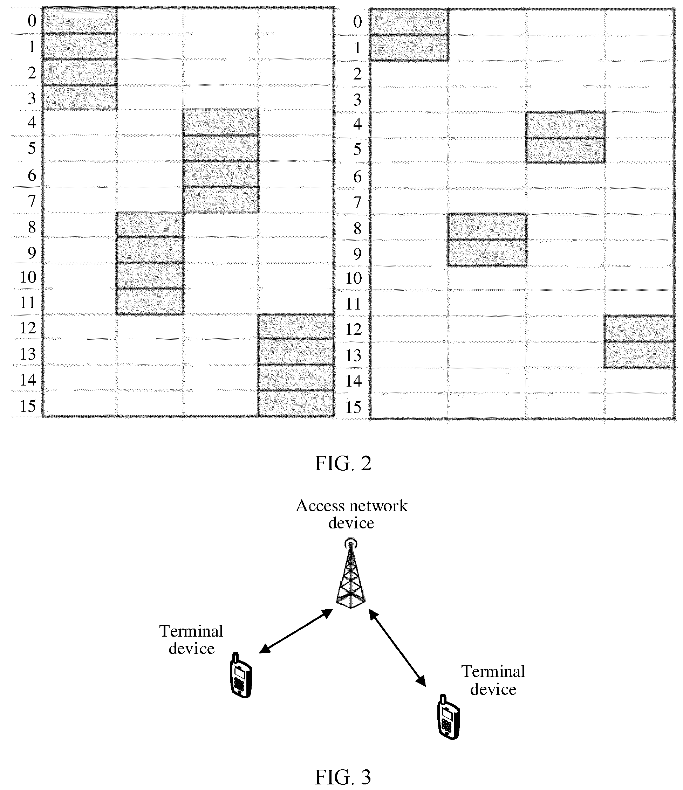

The transmit bandwidth, the frequency hopping bandwidth, and the frequency hopping periodicity of the SRS are determined based on a higher-layer parameter and a pre-defined table in a protocol. When a base station does not configure a frequency scale factor $P_F$, the transmit bandwidth of the SRS is a bandwidth range corresponding to a channel obtained by the base station based on the SRS; the frequency hopping bandwidth of the SRS is a bandwidth range corresponding to a channel obtained by the base station after the SRS is sent for single time, where the frequency hopping bandwidth is less than or equal to a scanning bandwidth; and the frequency hopping periodicity is a quantity of times that the SRS needs to be sent for the base station to obtain the channel corresponding to the transmit bandwidth. When the base station configures the frequency scale factor $P_F$ by using a higher-layer parameter, the transmit bandwidth, the frequency hopping bandwidth, and the frequency hopping periodicity of the SRS remain unchanged. However, because a bandwidth for sending the SRS for single time changes to $1/P_F$ of the original bandwidth, the transmit bandwidth is $P_F$ multiples of the bandwidth range corresponding to the channel obtained by the base station based on the SRS, and the frequency hopping bandwidth of the SRS is $P_F$ multiples of the bandwidth range corresponding to the channel obtained by the base station after the SRS is sent for single time. FIG. 2 shows an example of a transmit bandwidth and a frequency hopping bandwidth according to an embodiment of this application. In FIG. 2, each grid represents a resource block (resource block, RB) in frequency domain, a bandwidth of an SRS is 16 RBs, a frequency hopping bandwidth is 4 RBs, and a frequency hopping periodicity is 4. No $P_F$ is configured in a left figure, and $P_F$=2 is configured in a right figure.

3. SRS cyclic shift

A sequence $r_{u,v}^{(\alpha,\delta)}(n)$ used by an SRS in LTE and NR is a cyclic shift of a base sequence (base sequence) $\bar{r}_{u,v}(n)$.

$$r_{u,v}^{(\alpha,\delta)}(n) = e^{j\alpha n}\bar{r}_{u,v}(n), 0 \le n < M_{ZC} \qquad (4)$$

$\alpha$ is a cyclic shift value and is a real number; $\delta = \log_2(K_{TC})$, and is an integer; u,v is an index of a base sequence in an SRS base sequence group, and is an integer; $j$ is an imaginary unit; $M_{ZC}$ is a length of an SRS sequence, and is a positive integer; and $n$ is an index of an element in the SRS sequence, and is an integer. Sequence elements (that is, elements in the SRS sequence) are sequentially mapped, in ascending order of indexes, to subcarriers corresponding to an SRS resource that are in ascending order of subcarrier indexes.

The base sequence $\bar{r}_{u,v}(n)$ may be a sequence generated based on a Zadoff-Chu (ZC) sequence, for example, the ZC sequence itself, or a sequence generated by extending or intercepting the ZC sequence by using a cyclic shift. For example, if a ZC sequence whose length is $N$ is $z_q(n)$, $n = 0,1, ... , N$-1, a sequence whose length is $M$ and that is generated based on the ZC sequence may be represented as: $z_q(m \bmod N)$, $m = 0,1, ..., M$-1. The ZC sequence whose length is $N$ may be represented in the following form:

$$z_q(n) = \begin{cases} \exp\left(-j\pi q \cdot \dfrac{n(n+1)}{N}\right), N \text{ is an odd number} \\ \exp\left(-j\pi q \cdot \dfrac{n^2}{N}\right), N \text{ is an even number} \end{cases} \qquad (5)$$

$N$ is a positive integer; and $q$ is a root indicator of the ZC sequence, and is a positive integer that is relatively prime to $N$ and that is less than $N$.

A cyclic shift $\alpha_i$ corresponding to an SRS port $p_i$ is defined by the following formula:

$$\alpha_i = 2\pi \frac{n_{SRS}^{cs,i}}{n_{SRS}^{cs,max}} \qquad (6)$$

$$n_{SRS}^{cs,i} = \begin{cases} \left(n_{SRS}^{cs} + \dfrac{n_{SRS}^{cs,max}\lfloor(p_i-1000)/2\rfloor}{N_{ap}^{SRS}/2}\right) \bmod n_{SRS}^{cs,max} & \text{if } N_{ap}^{SRS} = 4 \text{ and } n_{SRS}^{cs,max}=6 \\ \left(n_{SRS}^{cs} + \dfrac{n_{SRS}^{cs,max}(p_i-1000)}{N_{ap}^{SRS}}\right) \bmod n_{SRS}^{cs,max} & \text{otherwise} \end{cases} \qquad (7)$$

$N_{ap}^{SRS}$ represents a port quantity (that is, a quantity of SRS ports included in an SRS resource). $n_{SRS}^{cs,max}$ is a maximum cyclic shift quantity, and is defined based on a value of $K_{TC}$. Refer to Table 1.

Table 1

| $K_{TC}$ | $n_{SRS}^{cs,max}$ |
|---|---|
| 2 | 8 |
| 4 | 12 |
| 8 | 6 |

A meaning of $n_{\mathrm{SRS}}^{\mathrm{cs,max}}$ be understood as equally dividing a delay domain into $n_{\mathrm{SRS}}^{\mathrm{cs,max}}$ parts, or may be understood as equally dividing a phase value $2\pi$ into $n_{\mathrm{SRS}}^{\mathrm{cs,max}}$ parts, and each cyclic shift value corresponds to a start point of each part. $n_{\mathrm{SRS}}^{\mathrm{cs}} \in \{0, 1, \ldots, n_{\mathrm{SRS}}^{\mathrm{cs,max}} - 1\}$ is a cyclic shift reference index, and is semi-statically configured by a base station by using a higher-layer parameter *transmissionComb*.

For a same base sequence, different SRS sequences may be obtained by using different cyclic shift values $\alpha$. When $\alpha_1$ and $\alpha_2$ meet $\alpha_1 \bmod 2\pi \neq \alpha_2 \bmod 2\pi$, a sequence obtained based on the base sequence $\bar{r}_{u,v}(n)$ and a cyclic shift $\alpha_1$ is orthogonal to a sequence obtained based on the base sequence $\bar{r}_{u,v}(n)$ and a cyclic shift $\alpha_2$, that is, a cross-correlation is zero. A cross-correlation between sequences $s_1(m)$ and $s_2(m)$, $m = 0, 1, \ldots, M - 1$ whose lengths are M is defined as $\left| \frac{1}{M} \sum_{m=0}^{M-1} s_1(m) s_2^*(m) \right|$, where $s_2^*(m)$ represents a conjugate of $s_2(m)$. Because SRS sequences obtained based on a same base sequence and different cyclic shift values are orthogonal to each other, the base station may allocate the SRS sequences obtained based on the same base sequence and the different cyclic shift values to different users, and the users may send the SRS sequences on a same time-frequency resource. In this application, the user is a terminal device, for example, a mobile phone. When channels between the base station and the users are flat within lengths of the SRS sequences, the SRS sequences do not cause interference between the users.

For different base sequences, regardless of whether a same cyclic shift value or different cyclic shift values are used, interference exists between obtained SRS sequences. In other words, if the base station allocates, to different users, SRS sequences obtained based on a same cyclic shift value or different cyclic shift values of different base sequences, the users may send the SRS sequences on a same time-frequency resource. When channels between the base station and the users are flat within lengths of the SRS sequences, the SRS sequences cause interference between the users.

For example, two cells respectively use base sequences $s_1$ and $s_2$, and each cell has two users, and the two users in each cell use two different cyclic shift values of a same base sequence. In this case, four users may send SRSs on a same time-frequency resource. Refer to Table 2. A UE 1 and a UE 2 are located in a same cell, and a UE 3 and a UE 4 are located in a same cell. Both the UE 1 and the UE 2 use the base sequence $s_1$, the UE 1 sends an SRS by using a cyclic shift value $\alpha_1$ of the base sequence $s_1$ as an SRS sequence, and the UE 2 sends an SRS by using a cyclic shift $\alpha_2$ of the base sequence $s_1$ as an SRS sequence. Both the UE 3 and the UE 4 use the base sequence $s_2$, the UE 3 sends an SRS by using a cyclic shift $\alpha_3$ of the base sequence $s_2$ as an SRS sequence, and the UE 4 sends an SRS by using a cyclic shift $\alpha_4$ of the base sequence $s_2$ as an SRS sequence.

Table 2

| UE 1: $s_1$, $\alpha_1$ | UE 2: $s_1$, $\alpha_2$ |
| --- | --- |
| UE 3: $s_2$, $\alpha_3$ | UE 4: $s_2$, $\alpha_4$ |

It is assumed that channels between the base station and the four UEs are flat on $M$ subcarriers occupied by the SRS sequences, and are respectively $h_1$, $h_2$, $h_3$, and $h_4$. On a $k^{th}$ subcarrier in the $M$ subcarriers occupied by the SRS sequences, a received signal $y(k)$ of the base station is:

$$y(k) = h_1 s_1(k) e^{j\alpha_1 k} + h_2 s_1(k) e^{j\alpha_2 k} + h_3 s_2(k) e^{j\alpha_3 k} + h_4 s_2(k) e^{j\alpha_4 k} \tag{8}$$

To estimate the channel $h_1$ of the UE 1, the base station may perform, by using the following formula, a related operation between the received signal and the SRS sequence used by the UE:

$$\frac{1}{M} \sum_{k=0}^{M-1} y(k) \times \left( s_1(k) e^{j\alpha_1 k} \right)^* = h_1 + \frac{1}{M} h_3 \sum_{k=0}^{M-1} s_2(k) s_1^*(k) e^{j(\alpha_3 - \alpha_1)k} +$$

$$\frac{1}{M} h_4 \sum_{k=0}^{M-1} s_2(k) s_1^*(k) e^{j(\alpha_4 - \alpha_1)k} \tag{9}$$

$\frac{1}{M} h_3 \sum_{k=0}^{M-1} s_2(k) s_1^*(k) e^{j(\alpha_3 - \alpha_1)k}$ is interference generated by the UE 3 in channel estimation for the UE 1, and

$$\frac{1}{M} h_4 \sum_{k=0}^{M-1} s_2(k)s_1^*(k)e^{j(\alpha_4-\alpha_1)k}$$ is interference generated by the UE 4 in channel estimation for the UE 1. It can be learned that interference between SRS sequences of two UEs is affected by a difference between cyclic shifts of the two SRS sequences.

Because interference between SRS sequences of two UEs is affected by a difference between cyclic shifts of the two sequences, interference between SRS sequences may be randomized through cyclic shift hopping. In a possible implementation of cyclic shift hopping, a cyclic shift of an SRS is determined by using the following formula:

$$\alpha = \frac{2\pi}{M_{ZC}} \left( \left( \sum_{m=0}^{7} c(8(n_f N_{\text{slot}}^{\text{frame},\mu} N_{\text{symb}}^{\text{slot}} + n_{\text{s,f}}^{\mu} N_{\text{symb}}^{\text{slot}} + l_0 + l') + m) \cdot 2^m \right) \mod M_{ZC} \right.$$
$$\left. + \frac{2\pi}{n_{\text{SRS}}^{\text{cs,max}}} \left( \left( n_{\text{SRS}}^{\text{cs}} + \frac{n_{\text{SRS}}^{\text{cs,max}}(p-1000)}{N_{\text{ap}}^{\text{SRS}}} \right) \mod n_{\text{SRS}}^{\text{cs,max}} \right) \right) \qquad (10)$$

$n_f$ is a system frame number (system frame number, SFN); $N_{\text{slot}}^{\text{frame},\mu}$ is a quantity of slots included in each frame in a subcarrier configuration $\mu$; $N_{\text{symb}}^{\text{slot}}$ is a quantity of symbols included in each slot; $n_{\text{s,f}}^{\mu}$ is a time-domain start location that is in a slot and that is of an SRS resource with a slot number $l_0 \in \{0, 1, ..., 13\}$ in a frame in the subcarrier configuration $\mu$; $l' \in \{0, 1, ..., N_{\text{symb}}^{\text{SRS}} - 1\}$ is an index of an OFDM symbol in the SRS resource; and $M_{ZC}$ is a length of an SRS sequence.

Another possible implementation of cyclic shift hopping is that cyclic shifts of an SRS at different moments follow a cyclic shift change pattern. For example, a cyclic shift change pattern followed by an SRS port $p_i$ indicates that $p_i$ sequentially sends an SRS by using a cyclic shift 1, a cyclic shift 2, 3, ..., and a cyclic shift d of a base sequence as an SRS sequence, where d is an integer greater than 1. In other words, the SRS port $p_i$ first sends the SRS by using the cyclic shift 1 of the base sequence as the SRS sequence, then sends the SRS by using the cyclic shift 2 of the base sequence as the SRS sequence, and further sends the SRS by using the cyclic shift 3 of the base sequence as the SRS sequence, and so on. After the SRS is sent by using the cyclic shift d of the base sequence as the SRS sequence, the SRS starts to be sent by using the cyclic shift 1 of the base sequence as the SRS sequence again.

As described in the background, interference between SRS sequences can be randomized through cyclic shift hopping to achieve a better interference randomization effect. However, in an actual application scenario, there are both a terminal device that supports cyclic shift hopping and a terminal device that does not support cyclic shift hopping. In this application, the terminal device that supports cyclic shift hopping is a terminal device that can randomize interference between SRS sequences in through cyclic shift hopping. In other words, the terminal device that supports cyclic shift hopping has a capability or a function of randomizing interference between SRS sequences through cyclic shift hopping. In this application, the terminal device that does not support cyclic shift hopping is a terminal device that cannot randomize interference between SRS sequences through cyclic shift hopping. In other words, the terminal device that does not support cyclic shift hopping does not have a capability or a function of randomizing interference between SRS sequences through cyclic shift hopping. When an access network device (for example, a base station) configures, on a same comb for multiplexing, an SRS port corresponding to a terminal device that supports cyclic shift hopping and an SRS port corresponding to a terminal device that does not support cyclic shift hopping, channel estimation performance of the two terminal devices may be severely degraded. Therefore, how to ensure that channel estimation performance is not degraded in the foregoing case when fully utilizing an interference randomization effect brought by cyclic shift hopping is an urgent problem to be resolved.

According to the communication solution provided in this application, it can be ensured that channel estimation performance is not degraded when fully utilizing an interference randomization effect brought by cyclic shift hopping.

The communication solution provided in this application is applicable to a transmission scenario, and is mainly specific to an SRS transmission scenario. The communication solution provided in this application is applicable to both a homogeneous network scenario and a heterogeneous network scenario. The communication solution provided in this application imposes no limitation on a transmission point in an applicable transmission scenario, and may be coordinated multipoint transmission between macro base stations, between micro base stations, or between a macro base station and a micro base station, and is applicable to both an FDD system and a TDD system. The communication solution provided in this application is applicable to a low-frequency scenario (sub 6G), a high-frequency scenario (above 6G), a single-transmission and reception point (transmission reception point, TRP) scenario, a multi-transmission and reception point (multi-TRP) scenario, and any derivative scenario thereof. The communication solution provided in this application may be applied to a 5G communication system, a satellite communication system, a short-range communication system, or another wireless communication system. A wireless communication system to which the communication solution provided in this application is applicable may follow a wireless communication standard of the third generation partnership project (third generation partnership project, 3GPP), or may follow another wireless communication standard, for example, a wireless communication standard of an 802 family of the Institute of Electrical and Electronics Engineers (Institute of Electrical and Electronics Engineers, IEEE) (for example, 802.11, 802.15, or 802.20).

It should be noted that the wireless communication system mentioned in embodiments of this application includes but is not limited to: a narrowband-Internet of Things (narrow band-Internet of Things, NB-IoT) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) communication system, and an evolved communication system after 5G, such as a future 6th generation (6th generation, 6G) communication system. The technical solutions of this application may be further applied to a wireless local area network system such as a wireless local area network (wireless local area network, WLAN), an Internet of Things (Internet of Things, IoT) network, an ultra-wideband (ultra-wideband, UWB) system, or an Internet of Vehicles (Vehicle to X, V2X).

The following first describes an example of a wireless communication system to which the communication solution provided in this application is applicable.

FIG. 3 shows an example of a wireless communication system according to an embodiment of this application. As shown in FIG. 3, the communication system includes: one or more terminal devices, where in FIG. 3, only two terminal devices are used as an example; and one or more access network devices (for example, base stations) that can provide a communication service for the terminal device, where in FIG. 3, only one access network device is used as an example. In some embodiments, the wireless communication system may include cells, each cell includes one or more access network devices, and the access network device provides a communication service for a plurality of terminal devices. The wireless communication system may also perform point-to-point communication. For example, a plurality of terminal devices communicate with each other.

The terminal device is a device that has a wireless transceiver function. The terminal device may communicate with one or more core network (core network, CN) devices (or referred to as core devices) through an access network device (or referred to as an access device) in a radio access network (radio access network, RAN). The terminal device may send an uplink signal and receive a downlink signal. The terminal device may be deployed on land, including indoor or outdoor, or handheld or vehicle-mounted; may be deployed on a water surface (for example, on a ship); or may be deployed in air (for example, on aircraft, a balloon, and a satellite). In embodiments of this application, the terminal device may also be referred to as a terminal or a user equipment (user equipment, UE), and may be a mobile phone (mobile phone), a mobile station (mobile station, MS), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal, an uncrewed aerial vehicle, or the like. The terminal device may include various handheld devices, vehicle-mounted devices, wearable devices, or computing devices that have a wireless communication function, or other processing devices connected to wireless modems. Optionally, the terminal device may be a handheld device (handset) having a wireless communication function, a vehicle-mounted device, a wearable device, or a terminal device in an Internet of Things or an Internet of Vehicles, a terminal device in any form in 5G and a communication system evolved after 5G, or the like. This is not limited in this application.

The access network device may be any device that has a wireless transceiver function and that can communicate with the terminal device, for example, a radio access network (radio access network, RAN) node that connects the terminal device to a wireless network. The access network device may configure uplink and downlink resources, send a downlink signal, and receive an uplink signal. Currently, some examples of the RAN node include a macro base station, a micro base station (also referred to as a small cell), a picocell base station, a femto base station, a relay station, an access point, a gNB, a transmission and reception point (transmission reception point, TRP), an evolved NodeB (evolved NodeB, eNB), a radio network controller (radio network controller, RNC), a home base station (for example, a home evolved NodeB, or a home NodeB, HNB), a baseband unit (baseband unit, BBU), a Wi-Fi access point (access point, AP), an integrated access and backhaul (integrated access and backhaul, IAB) node, a satellite, an uncrewed aerial vehicle, and the like.

The following first describes, with reference to the accompanying drawings, the communication method provided in embodiments of this application A main principle of the communication method provided in this application is as follows:

A communication apparatus that supports cyclic shift hopping obtains a cyclic shift range available to an SRS port corresponding to the communication apparatus. When a cyclic shift value occupied by the SRS port corresponding to the communication apparatus jumps within the cyclic shift range available to the SRS port, degradation of channel estimation performance can be avoided, and an interference randomization effect brought by cyclic shift hopping is fully utilized.

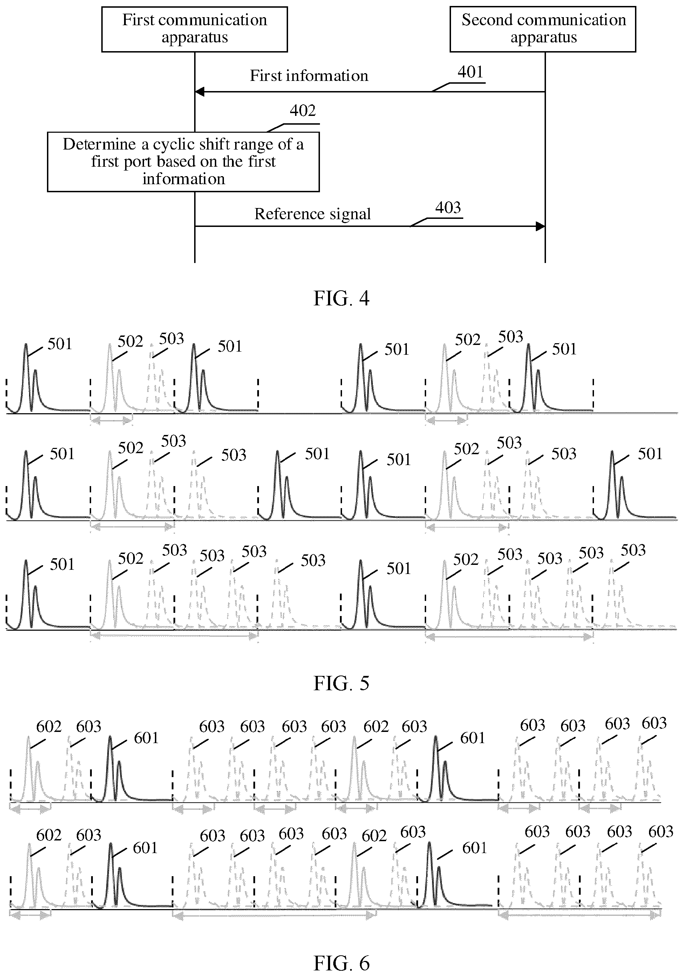

FIG. 4 is a flowchart of a communication interaction method according to an embodiment of this application. As shown in FIG. 4, the method includes the following steps.

401: A second communication apparatus sends first information to a first communication apparatus.

Correspondingly, the first communication apparatus receives the first information from the second communication apparatus. The second communication apparatus may be an access network device, for example, a base station. The first communication apparatus is a terminal device. The first information is used to indicate a cyclic shift range of a first port, and the first port is one of ports corresponding to the first communication apparatus. The first port may be one of several SRS ports included in an SRS resource in an SRS resource set. In this embodiment of this application, the first port is used as an example to describe a procedure in which the first communication apparatus determines the cyclic shift range of the SRS port. It should be understood that the first communication apparatus may determine a cyclic shift range of any SRS port in a similar manner.

The first information may be carried on one or more pieces of signaling in a same format/different formats, for example, radio resource control (radio resource control, RRC) signaling, a media access control (media access control, MAC) control element (control element, CE), downlink control information (downlink control information, DCI), or the like.

The second communication apparatus generates the first information before sending the first information. The first information is used by the first communication apparatus to determine the cyclic shift range of the first port. Optionally, the second communication apparatus generates the first information based on occupation of a cyclic shift index by an SRS port that does not support cyclic shift hopping and/or occupation of a cyclic shift index by an SRS port that supports cyclic shift hopping and/or a delay spread of a channel corresponding to an SRS port that supports cyclic shift hopping. Refer to the following Embodiment 1.

402: The first communication apparatus determines the cyclic shift range of the first port based on the first information.

The cyclic shift range of the first port includes two or more cyclic shift values.

In a possible implementation, the first information indicates a first interval length, and the cyclic shift range of the first port is jointly determined by a cyclic shift value configured for the first port and the first interval length. For example, the first interval length indicated by the first information is $2\pi \frac{\beta}{n_{\text{SRS}}^{\text{cs,max}}}$, the cyclic shift value configured for the first port is $2\pi \frac{n_{\text{SRS}}^{\text{cs},i}}{n_{\text{SRS}}^{\text{cs,max}}}$, and the cyclic shift range of the first port is $\left[2\pi \frac{n_{\text{SRS}}^{\text{cs},i}}{n_{\text{SRS}}^{\text{cs,max}}}, 2\pi \frac{n_{\text{SRS}}^{\text{cs},i}+\beta}{n_{\text{SRS}}^{\text{cs,max}}}\right]$. In this implementation, the first information indicates the first interval length. The first communication apparatus may quickly and accurately determine the cyclic shift range of the first port based on the first information and the cyclic shift value configured for the first port.

In a possible implementation, the first information indicates a port quantity $N_{\text{ap}}^{\text{SRS}}$, a comb quantity $K_{\text{TC}}$, a cyclic shift reference index $n_{\text{SRS}}^{\text{cs}}$, and a first scale factor $\beta$. A possible implementation of step 402 is as follows: The first communication apparatus determines a maximum cyclic shift quantity $n_{\text{SRS}}^{\text{cs,max}}$ based on the comb quantity $K_{\text{TC}}$. Refer to Table 1; determines a cyclic shift value $2\pi \frac{n_{\text{SRS}}^{\text{cs},i}}{n_{\text{SRS}}^{\text{cs,max}}}$ configured for the first port based on the port quantity $N_{\text{ap}}^{\text{SRS}}$, the cyclic shift reference index $n_{\text{SRS}}^{\text{cs}}$, and the maximum cyclic shift quantity $n_{\text{SRS}}^{\text{cs,max}}$. Refer to the foregoing formula (6) and formula (7); determines a first interval length $2\pi \frac{\beta}{n_{\text{SRS}}^{\text{cs,max}}}$ based on the first scale factor $\beta$ and the maximum cyclic shift quantity $n_{\text{SRS}}^{\text{cs,max}}$; and determines the cyclic shift range $\left[2\pi \frac{n_{\text{SRS}}^{\text{cs},i}}{n_{\text{SRS}}^{\text{cs,max}}}, 2\pi \frac{n_{\text{SRS}}^{\text{cs},i}+\beta}{n_{\text{SRS}}^{\text{cs,max}}}\right]$ of the first port based on the cyclic shift value $2\pi \frac{n_{\text{SRS}}^{\text{cs},i}}{n_{\text{SRS}}^{\text{cs,max}}}$ configured for the first port and the first interval length $2\pi \frac{\beta}{n_{\text{SRS}}^{\text{cs,max}}}$. That the first information indicates the port quantity, the comb quantity, the cyclic shift reference index, and the first scale factor may be replaced with the following: The first information indicates the port quantity, the comb quantity, and the cyclic shift reference index, and the first scale factor is predefined, that is, the first information does not need to indicate the first scale factor. In this implementation, the first communication apparatus determines the cyclic shift range of the first port based on the first information, to ensure that channel estimation performance is not degraded when fully utilizing an interference randomization effect brought by cyclic shift hopping.

In a possible implementation, the first information indicates a first set, the first set includes a cyclic shift index unavailable to the first port, and the cyclic shift range of the first port is determined by the first set. The cyclic shift index unavailable to the first port may be understood as a cyclic shift index occupied by an SRS port corresponding to a communication apparatus that does not support cyclic shift hopping, or a cyclic shift index corresponding to a cyclic shift value occupied by an SRS port corresponding to a communication apparatus that does not support cyclic shift hopping, that is, a cyclic shift index that has been occupied by an SRS port that does not support cyclic shift hopping, or a cyclic shift index corresponding to a cyclic shift value that has been occupied by an SRS port that does not support cyclic shift hopping. Optionally, the first information indicates, through a bitmap, the cyclic shift index included in the first set, N bits in the bitmap are in one-to-one correspondence with N cyclic shift indexes, and that a value of any bit in the N bits is 1 or 0 indicates that a cyclic shift index corresponding to the any bit belongs to the first set. N is an integer greater than 1. N may be equal to a maximum cyclic shift quantity $n_{\mathrm{SRS}}^{\mathrm{cs,max}}$, or may be another value. This is not limited in this application. In this implementation, the cyclic shift range of the first port is determined by the first set, so that the cyclic shift range of the first port can be accurately determined.

In a possible implementation, the first information indicates a first set, a comb quantity $K_{\mathrm{TC}}$, and a second scale factor $\gamma$, the first set includes a cyclic shift index unavailable to the first port, and the cyclic shift range of the first port is jointly determined by the first set, the comb quantity, and the second scale factor. A possible implementation of step 402 is as follows: The first communication apparatus determines a maximum cyclic shift quantity $n_{\mathrm{SRS}}^{\mathrm{cs,max}}$ based on the comb quantity $K_{\mathrm{TC}}$. Refer to Table 1; and determines the cyclic shift range of the first port based on the maximum cyclic shift quantity $n_{\mathrm{SRS}}^{\mathrm{cs,max}}$, the first set, and the second scale factor $\gamma$. That the first information indicates the first set, the comb quantity, and the second scale factor may be replaced with the following: The first information indicates the first set and the comb quantity, and the second scale factor is predefined, that is, the first information does not need to indicate the second scale factor. Optionally, the first communication apparatus determines the cyclic shift range of the first port by using the foregoing formula (1) or formula (2). In this implementation, the cyclic shift range of the first port is jointly determined by the first set, the comb quantity, and the second scale factor, so that the cyclic shift range of the first port can be accurately determined.

In a possible implementation, the first information indicates a second set, the second set includes one or more cyclic shift indexes, the second set is a proper subset of a universal set including all cyclic shift indexes, and the cyclic shift range of the first port is determined by the second set. The one or more cyclic shift indexes included in the second set may be considered as cyclic shift indexes available to the first port. Herein, the universal set including all the cyclic shift indexes may be $\left\{0, 1, \cdots, n_{\mathrm{SRS}}^{\mathrm{cs,max}} - 1\right\}$, may be $[0, 1, \cdots, M_{\mathrm{ZC}} - 1]$, or may include another value, where $n_{\mathrm{SRS}}^{\mathrm{cs,max}}$ represents a maximum cyclic shift quantity, and $M_{\mathrm{ZC}}$ represents a length of an SRS sequence. Optionally, the first information indicates, through a bitmap, the cyclic shift index included in the second set, N bits in the bitmap are in one-to-one correspondence with N cyclic shift indexes, and that a value of any bit in the N bits is 1 or 0 indicates that a cyclic shift index corresponding to the any bit belongs to the second set. N is an integer greater than 1. N may be equal to the maximum cyclic shift quantity $n_{\mathrm{SRS}}^{\mathrm{cs,max}}$, may be equal to the length $M_{\mathrm{ZC}}$ of the SRS sequence, or may be another value. This is not limited in this application. In this implementation, the cyclic shift range of the first port is determined by the second set, so that the cyclic shift range of the first port can be accurately determined.

In a possible implementation, the first information indicates a second set, a comb quantity $K_{\mathrm{TC}}$, and a third scale factor $\delta$, the second set includes one or more cyclic shift indexes, the second set is a proper subset of a universal set including all cyclic shift indexes, and the cyclic shift range of the first port is jointly determined by the second set, the comb quantity, and the third scale factor. A possible implementation of step 402 is as follows: The first communication apparatus determines a maximum cyclic shift quantity $n_{\mathrm{SRS}}^{\mathrm{cs,max}}$ based on the comb quantity $K_{\mathrm{TC}}$. Refer to Table 1; and determines the cyclic shift range of the first port based on the maximum cyclic shift quantity $n_{\mathrm{SRS}}^{\mathrm{cs,max}}$, the second set, and the third scale factor $\delta$. That the first information indicates the second set, the comb quantity, and the third scale factor may be replaced with the following: The first information indicates the second set and the comb quantity, and the third scale factor is predefined, that is, the first information does not need to indicate the third scale factor. Optionally, the first communication apparatus determines the cyclic shift range of the first port by using the foregoing formula (3). In this implementation, the cyclic shift range of the first port is jointly determined by the first set, the comb quantity, and the third scale factor, so that the cyclic shift range of the first port can be accurately determined.

403: The first communication apparatus sends a reference signal on the first port.

That the first communication apparatus sends a reference signal on the first port may be as follows: The first communication apparatus sends the reference signal on the first port based on the cyclic shift range of the first port. When the first communication apparatus sends the reference signal on the first port, a cyclic shift value occupied by the first port belongs to the cyclic shift range of the first port.

Optionally, the cyclic shift value occupied by the first port changes with a sending moment and/or a sending frequency of the reference signal, and the cyclic shift value occupied by the first port belongs to the cyclic shift range of the first port. The cyclic shift value occupied by the first port is a cyclic shift value occupied for sending the reference signal, and the reference signal may be an SRS. That the cyclic shift value occupied by the first port changes with a sending moment of the reference signal may be understood as follows: Cyclic shift values occupied by the first port for sending the SRS at different moments are different. For example, the first communication apparatus occupies a cyclic shift value 1 when sending an SRS 1 by using the first port at a first moment, and the first communication apparatus occupies a cyclic shift value 2 when sending an SRS 2 by using the first port at a second moment. The first moment is different from the second moment, and the cyclic shift value 1 is different from the cyclic shift value 2. That the cyclic shift value occupied by the first port changes with a sending frequency of the reference signal may be understood as follows: Cyclic shift values occupied by the first port for sending the SRS on different frequency resources are different. For example, the first communication apparatus occupies a cyclic shift value 1 when sending an SRS 1 on a frequency resource 1 by using the first port, and the first communication apparatus occupies a cyclic shift value 2 when sending an SRS 2 on a frequency resource 2 by using the first port. The frequency resource 1 is different from the frequency resource 2, the cyclic shift value 1 is different from the cyclic shift value 2, and the frequency resource 1 and the frequency resource 2 correspond to a same time resource or different time resources.

In this embodiment of this application, the first communication apparatus determines the cyclic shift range of the first port based on the first information. When the first communication apparatus occupies any cyclic shift value in the cyclic shift range to send the reference signal, the following problem can be avoided or mitigated: when an SRS port corresponding to a terminal device that supports cyclic shift hopping and an SRS port corresponding to a terminal device that does not support cyclic shift hopping are configured on a same comb for multiplexing, channel estimation performance of the two terminal devices may be severely degraded. In other words, the first communication apparatus determines the cyclic shift range of the first port based on the first information, to ensure that channel estimation performance is not degraded when fully utilizing an interference randomization effect brought by cyclic shift hopping.

The following describes, by using several embodiments, possible formats of the first information and possible implementations in which the first communication apparatus determines the cyclic shift range of the first port based on the first information.

Embodiment 1: The first information indicates the cyclic shift range of the first port. That the first information indicates the cyclic shift range of the first port may be considered as follows: The first information indicates a first interval length, and the cyclic shift range of the first port is jointly determined by a cyclic shift value configured for the first port and the first interval length.

Optionally, there is a correspondence between a value of a first field in the first information and the cyclic shift range of the first port. The first field occupies one or more bits (bits). Alternatively, there is a correspondence between a value of the first field in the first information and the first interval length.

Example 11: The first field in the first information occupies 1 bit. The correspondence between the value of the first field in the first information and the cyclic shift range of the first port may be as follows:

If the value of the first field is 0, the first field indicates that the cyclic shift range of the first port is $[0, 2\pi]$, that is, the cyclic shift range of the first port is not limited; or in other words, if the value of the first field is 0, the first field indicates that the first interval length is $2\pi$.

If the value of the first field is 1, the first field indicates that the cyclic shift range of the first port is

$$\left[ 2\pi \frac{n_{\text{SRS}}^{\text{cs},i}}{n_{\text{SRS}}^{\text{cs,max}}}, 2\pi \frac{n_{\text{SRS}}^{\text{cs},i}+\beta}{n_{\text{SRS}}^{\text{cs,max}}} \right]$$ ; or in other words, if the value of the first field is 1, the first field indicates that the first interval length is $2\pi \dfrac{\beta}{n_{\text{SRS}}^{\text{cs,max}}}$ .

$\beta > 0$ is a first scale factor that is predefined or indicated by the second communication apparatus (for example, a base station) by using the first information. Optionally, the first information further indicates $K_{\text{TC}}$, $n_{\text{SRS}}^{\text{cs}}$, and $N_{\text{ap}}^{\text{SRS}}$ . The

first communication apparatus obtains $n_{\mathrm{SRS}}^{\mathrm{cs,max}}$ based on $\boldsymbol{K}_{\mathrm{TC}}$. Refer to Table 1; obtains $2\pi \dfrac{n_{\mathrm{SRS}}^{\mathrm{cs,}i}}{n_{\mathrm{SRS}}^{\mathrm{cs,max}}}$ based on $n_{\mathrm{SRS}}^{\mathrm{cs,max}}$, $n_{\mathrm{SRS}}^{\mathrm{cs}}$, and $N_{\mathrm{ap}}^{\mathrm{SRS}}$. Refer to the foregoing formula (6) and formula (7); obtains $2\pi \dfrac{\beta}{n_{\mathrm{SRS}}^{\mathrm{cs,max}}}$ based on $\beta$ and $n_{\mathrm{SRS}}^{\mathrm{cs,max}}$; and obtains $\left[2\pi \dfrac{n_{\mathrm{SRS}}^{\mathrm{cs,}i}}{n_{\mathrm{SRS}}^{\mathrm{cs,max}}}, 2\pi \dfrac{n_{\mathrm{SRS}}^{\mathrm{cs,}i}+\beta}{n_{\mathrm{SRS}}^{\mathrm{cs,max}}}\right]$ based on $2\pi \dfrac{n_{\mathrm{SRS}}^{\mathrm{cs,}i}}{n_{\mathrm{SRS}}^{\mathrm{cs,max}}}$ and $2\pi \dfrac{\beta}{n_{\mathrm{SRS}}^{\mathrm{cs,max}}}$. When the first information indicates the first interval length, $\boldsymbol{K}_{\mathrm{TC}}$, $n_{\mathrm{SRS}}^{\mathrm{cs}}$, $N_{\mathrm{ap}}^{\mathrm{SRS}}$, and $\beta$, or when the first information indicates the first interval length, $\boldsymbol{K}_{\mathrm{TC}}$, $n_{\mathrm{SRS}}^{\mathrm{cs}}$, and $N_{\mathrm{ap}}^{\mathrm{SRS}}$, the first communication apparatus may determine the cyclic shift range of the first port by using the first information. It should be understood that, the first field in the first information may be considered as a formula for determining the cyclic shift range of the first port or the first interval length, and $\boldsymbol{K}_{\mathrm{TC}}$, $n_{\mathrm{SRS}}^{\mathrm{cs}}$, $N_{\mathrm{ap}}^{\mathrm{SRS}}$, and $\beta$ that are indicated by the first information may be used as parameters required for determining the cyclic shift range of the first port or the first interval length.

For example, $n_{\mathrm{SRS}}^{\mathrm{cs,}i} = x$, $n_{\mathrm{SRS}}^{\mathrm{cs,max}} = 8$, and $\beta = \dfrac{1}{2}$. When the value of the first field is 0, the first field indicates that the cyclic shift range of the first port is not limited, that is, $[0, 2\pi]$, and the value of the first field corresponds to a case in which the second communication apparatus does not configure, on a same comb for code division multiplexing, the first port and an SRS port corresponding to a communication apparatus that does not support cyclic shift hopping. When the value of the first field is 1, the first field indicates that the cyclic shift range of the first port is $\left[\dfrac{2\pi}{8}x, \dfrac{2\pi}{8}\left(x+\dfrac{1}{2}\right)\right]$, that is, a delay domain is equally divided into eight parts (whose indexes are 0 to 7), and a cyclic shift value used by the first port may be any value from a start point of an $x^{\mathrm{th}}$ part to a midpoint of the $x^{\mathrm{th}}$ part, and the value of the first field corresponds to a case in which the second communication apparatus configures, on a same comb for code division multiplexing, the first port and an SRS port corresponding to a communication apparatus that does not support cyclic shift hopping. It may be understood that, if the second communication apparatus does not configure, on a same comb for code division multiplexing, the first port and an SRS port corresponding to a communication apparatus that does not support cyclic shift hopping, the second communication apparatus sends, to the first communication apparatus, the first information including the first field whose value is 0, and the first communication apparatus may learn, based on the first information, that the cyclic shift range of the first port is not limited, that is, the cyclic shift range of the first port is $[0, 2\pi]$. If the second communication apparatus configures, on a same comb for code division multiplexing, the first port and an SRS port corresponding to a communication apparatus that does not support cyclic shift hopping, the second communication apparatus sends, to the first communication apparatus, the first information including the first field whose value is 1, and the first communication apparatus determines the cyclic shift range of the first port based on the first information, for example, $\left[\dfrac{2\pi}{8}x, \dfrac{2\pi}{8}\left(x+\dfrac{1}{2}\right)\right]$.

Example 12: The first field in the first information occupies 2 bits. The correspondence between the value of the first field and the cyclic shift range of the first port may be as follows:

If the value of the first field is 00, the first field indicates that the first cyclic shift range of the first port is $[0, 2\pi]$, that is, the cyclic shift range of the first port is not limited; or in other words, if the value of the first field is 00, the first field indicates that the first interval length is $2\pi$.

If the value of the first field is 01, the first field indicates that the cyclic shift range of the first port is $[2\pi \dfrac{n_{\mathrm{SRS}}^{\mathrm{cs,}i}}{n_{\mathrm{SRS}}^{\mathrm{cs,max}}}, 2\pi \dfrac{n_{\mathrm{SRS}}^{\mathrm{cs,}i}+\beta_1}{n_{\mathrm{SRS}}^{\mathrm{cs,max}}}]$; or in other words, if the value of the first field is 01, the first field indicates that the first interval length is $2\pi \dfrac{\beta_1}{n_{\mathrm{SRS}}^{\mathrm{cs,max}}}$.

If the value of the first field is 10, the first field indicates that the cyclic shift range of the first port is $[2\pi \dfrac{n_{\mathrm{SRS}}^{\mathrm{cs,}i}}{n_{\mathrm{SRS}}^{\mathrm{cs,max}}}, 2\pi \dfrac{n_{\mathrm{SRS}}^{\mathrm{cs,}i}+\beta_2}{n_{\mathrm{SRS}}^{\mathrm{cs,max}}}]$; or in other words, if the value of the first field is 10, the first field indicates that the first interval length is $2\pi \dfrac{\beta_2}{n_{\mathrm{SRS}}^{\mathrm{cs,max}}}$ .

If the value of the first field is 11, the first field indicates that the cyclic shift range of the first port is

$[2\pi \dfrac{n_{\mathrm{SRS}}^{\mathrm{cs},i}}{n_{\mathrm{SRS}}^{\mathrm{cs,max}}}, 2\pi \dfrac{n_{\mathrm{SRS}}^{\mathrm{cs},i}+\beta_3}{n_{\mathrm{SRS}}^{\mathrm{cs,max}}}]$ ; or in other words, if the value of the first field is 11, the first field indicates that the first interval length is $2\pi \dfrac{\beta_3}{n_{\mathrm{SRS}}^{\mathrm{cs,max}}}$ .

$\beta_3 > \beta_2 > \beta_1 > 0$ is a first scale factor that is predefined or indicated by the second communication apparatus by using the first information. Optionally, the first information further indicates $K_{\mathrm{TC}}$, $n_{\mathrm{SRS}}^{\mathrm{cs}}$ , and $N_{\mathrm{ap}}^{\mathrm{SRS}}$ . The first

communication apparatus obtains $n_{\mathrm{SRS}}^{\mathrm{cs,max}}$ based on $K_{\mathrm{TC}}$. Refer to Table 1; obtains $2\pi \dfrac{n_{\mathrm{SRS}}^{\mathrm{cs},i}}{n_{\mathrm{SRS}}^{\mathrm{cs,max}}}$ based on

$n_{\mathrm{SRS}}^{\mathrm{cs,max}}$, $n_{\mathrm{SRS}}^{\mathrm{cs}}$ , and $N_{\mathrm{ap}}^{\mathrm{SRS}}$ . Refer to the foregoing formula (6) and formula (7); obtains

$2\pi \dfrac{\beta_1}{n_{\mathrm{SRS}}^{\mathrm{cs,max}}}, 2\pi \dfrac{\beta_2}{n_{\mathrm{SRS}}^{\mathrm{cs,max}}}$ , and $2\pi \dfrac{\beta_3}{n_{\mathrm{SRS}}^{\mathrm{cs,max}}}$ based on $\beta_1$, $\beta_2$, $\beta_3$, and $n_{\mathrm{SRS}}^{\mathrm{cs,max}}$ ; and obtains

$\left[2\pi \dfrac{n_{\mathrm{SRS}}^{\mathrm{cs},i}}{n_{\mathrm{SRS}}^{\mathrm{cs,max}}}, 2\pi \dfrac{n_{\mathrm{SRS}}^{\mathrm{cs},i}+\beta_1}{n_{\mathrm{SRS}}^{\mathrm{cs,max}}}\right]$ , $\left[2\pi \dfrac{n_{\mathrm{SRS}}^{\mathrm{cs},i}}{n_{\mathrm{SRS}}^{\mathrm{cs,max}}}, 2\pi \dfrac{n_{\mathrm{SRS}}^{\mathrm{cs},i}+\beta_2}{n_{\mathrm{SRS}}^{\mathrm{cs,max}}}\right]$ , and $\left[2\pi \dfrac{n_{\mathrm{SRS}}^{\mathrm{cs},i}}{n_{\mathrm{SRS}}^{\mathrm{cs,max}}}, 2\pi \dfrac{n_{\mathrm{SRS}}^{\mathrm{cs},i}+\beta_3}{n_{\mathrm{SRS}}^{\mathrm{cs,max}}}\right]$ based on

$2\pi \dfrac{\beta_1}{n_{\mathrm{SRS}}^{\mathrm{cs,max}}}, 2\pi \dfrac{\beta_2}{n_{\mathrm{SRS}}^{\mathrm{cs,max}}}, 2\pi \dfrac{\beta_3}{n_{\mathrm{SRS}}^{\mathrm{cs,max}}}$ , and $2\pi \dfrac{n_{\mathrm{SRS}}^{\mathrm{cs},i}}{n_{\mathrm{SRS}}^{\mathrm{cs,max}}}$ . When the first information indicates the first interval length,

$K_{\mathrm{TC}}$, $n_{\mathrm{SRS}}^{\mathrm{cs}}$ , $\beta_1$, $\beta_2$, and $\beta_3$, or indicates the first interval length, $K_{\mathrm{TC}}$, and $n_{\mathrm{SRS}}^{\mathrm{cs}}$ , the first communication apparatus may determine the cyclic shift range of the first port by using the first information. It should be understood that, the first field in the first information may be considered as a formula for determining the cyclic shift range of the first port or the first interval

length, and $K_{\mathrm{TC}}$, $n_{\mathrm{SRS}}^{\mathrm{cs}}$, $N_{\mathrm{ap}}^{\mathrm{SRS}}$ , $\beta_1$, $\beta_2$, and $\beta_3$ that are indicated by the first information may be used as parameters required for determining the cyclic shift range of the first port or the first interval length.

For example, $n_{\mathrm{SRS}}^{\mathrm{cs},i} = x, n_{\mathrm{SRS}}^{\mathrm{cs,max}} = 8, \beta_1 = \dfrac{1}{2}, \beta_2 = 1$ , and $\beta_3$ = 2. When the value of the first field is 00, the first field indicates that the cyclic shift range of the first port is not limited, that is, $[0, 2\pi]$, and the value of the first field corresponds to a case in which the second communication apparatus does not configure, on a same comb for code division multiplexing, the first port and an SRS port corresponding to a communication apparatus that does not support cyclic shift hopping. When the value of the first field is 01, the first field indicates that the cyclic shift range of the first port is

$\left[\dfrac{2\pi}{8}x, \dfrac{2\pi}{8}\left(x + \dfrac{1}{2}\right)\right]$ , that is, a delay domain is equally divided into eight parts (whose indexes are 0 to 7), and a cyclic shift value used by the first port may be any value from a start point of an $x^{\mathrm{th}}$ part to a midpoint of the $x^{\mathrm{th}}$ part. When the value of the first field is 10, the first field indicates that the cyclic shift range of the first port is $\left[\dfrac{2\pi}{8}x, \dfrac{2\pi}{8}\left(x + 1\right)\right]$ , that is, a delay domain is equally divided into eight parts (whose indexes are 0 to 7), and a cyclic shift value used by the first port may be any value from a start point of an $x^{\mathrm{th}}$ part to a start point of an $(x+1)^{\mathrm{th}}$ part. When the value of the first field is 11, the first field indicates that the cyclic shift range of the first port is $\left[\dfrac{2\pi}{8}x, \dfrac{2\pi}{8}\left(x + 2\right)\right]$ , that is, a delay domain is equally divided into eight parts (whose indexes are 0 to 7), and a cyclic shift value used by the first port may be any value from a start point of an $x^{\mathrm{th}}$ part to a start point of an $(x+2)^{\mathrm{th}}$ part. If the value of the first field is any one of 01, 10, or 11, the first field corresponds to a case in which the second communication apparatus configures, on a same comb for code division multiplexing, the first port and an SRS port corresponding to a communication apparatus that does not support cyclic shift hopping.

A specific value of the first field may be determined based on cyclic shift indexes configured by the second communication apparatus for SRS ports (referred to as SRS ports that do not support cyclic shift hopping below) corresponding to all communication apparatuses that do not support cyclic shift hopping on a same comb, cyclic shift indexes configured by the second communication apparatus for SRS ports (referred to as SRS ports that support cyclic shift hopping below) corresponding to all communication apparatuses that support cyclic shift hopping on the comb, and delay spreads of channels corresponding to all SRS ports that support cyclic shift hopping on the comb. In other words, the second communication apparatus may generate, based on occupation of a cyclic shift index by an SRS port that does not support cyclic shift hopping, occupation of a cyclic shift index by an SRS port that supports cyclic shift hopping, and a delay spread of a channel corresponding to the SRS port that supports cyclic shift hopping, the first information that indicates a cyclic shift range of the SRS port that supports cyclic shift hopping. The second communication apparatus may alternatively generate the first information based on another factor. This is not limited in this application. For any cyclic shift value within the cyclic shift range of the SRS port (for example, the first port) that supports cyclic shift hopping, it is required to ensure that after the SRS port that supports cyclic shift hopping occupies the any cyclic shift value to send an SRS, a delay domain channel corresponding to the SRS port that supports cyclic shift hopping does not overlap, as much as possible, with a delay domain channel corresponding to an SRS port that does not support cyclic shift hopping. The first information is used to indicate the cyclic shift range of the first port, and the first communication apparatus may obtain, with reference to the first scale factor that is predefined or indicated by the second communication apparatus by using the first information, a cyclic shift range of an SRS port corresponding to the first communication apparatus, to fully utilize an interference randomization effect brought by cyclic shift hopping when ensuring that channel estimation performance of an SRS port that does not support cyclic shift hopping and an SRS port that supports cyclic shift hopping are not degraded. The following describes, with reference to the accompanying drawings and examples, an implementation in which the second communication apparatus generates the first information that indicates the cyclic shift range of the SRS port that supports cyclic shift hopping.

FIG. 5 is a diagram of a delay domain channel corresponding to an SRS port according to an embodiment of this application. It is assumed that delay spreads of channels corresponding to SRS ports multiplexed on a same comb are approximately the same. Black vertical dashed lines equally divide a delay domain represented by a black horizontal solid line into eight parts (whose indexes are 0 to 7), a curve 501 represents a delay domain channel corresponding to an SRS port that does not support cyclic shift hopping, a solid curve 502 represents a delay domain channel corresponding to an SRS port that supports cyclic shift hopping when the SRS port does not perform cyclic shift hopping (that is, occupies a cyclic shift value configured by a base station), and a dashed curve 503 represents a delay domain channel corresponding to the SRS port that supports cyclic shift hopping after the SRS port performs cyclic shift hopping. An arrow represents a cyclic shift range available to the SRS port that supports cyclic shift hopping. It should be understood that, provided that a cyclic shift value of the SRS port that supports cyclic shift hopping is still within the range indicated by the arrow after the SRS port performs cyclic shift hopping, channel estimation performance of the SRS port that does not support cyclic shift hopping and the SRS port that supports cyclic shift hopping is not degraded.

Using a first row in FIG. 5 as an example, the second communication apparatus (for example, a base station) configures cyclic shift indexes 0, 2, 4, and 6 for SRS ports that do not support cyclic shift hopping, and configures cyclic shift indexes 1 and 5 for SRS ports that support cyclic shift hopping. The second communication apparatus estimates, in a specific manner (for example, predicts based on historical information), that delay spreads of channels corresponding to the SRS ports that support cyclic shift hopping are all relatively small (for example, delay paths of a channel corresponding to an SRS port configured with a cyclic shift index 1 are centrally distributed between a start point of a first part and a midpoint of the first part in the delay domain equally divided into eight parts, and delay paths of a channel corresponding to an SRS port configured with a cyclic shift index 5 are centrally distributed between a start point of a fifth part and a midpoint of the fifth part in the delay domain equally divided into eight parts). In this case, the second communication apparatus may indicate, by using a first field whose value is "01", that a cyclic shift range available to the SRS port configured with the cyclic shift index 1 is $\left[\frac{2\pi}{8}, \frac{2\pi}{8}(1+\beta_1)\right]$, and a cyclic shift range available to the SRS port configured with the cyclic shift index 5 is $\left[\frac{10\pi}{8}, \frac{2\pi}{8}(5+\beta_1)\right]$. The delay paths of the channel corresponding to the SRS port configured with the cyclic shift index 1 are centrally distributed between the start point of the first part and the midpoint of the first part in the delay domain equally divided into eight parts, and after the delay paths of the channel corresponding to the SRS port are shifted rightwards as a whole by $\frac{1}{16}$ of the delay domain ($\frac{1}{2}$ of one of the eight parts obtained by equally dividing the delay domain), the delay paths of the channel corresponding to the SRS port are distributed between the midpoint of the first part and an end point of the first part (a start point of a second part) in the delay domain equally divided into eight parts, which does not affect channel estimation performance of each SRS port. The delay paths of the channel corresponding to the SRS port configured with the cyclic shift index 5 are centrally distributed between the start point of the fifth part and the midpoint of the fifth part in the delay domain equally divided into eight parts, and after the delay paths of the channel corresponding to the SRS port are shifted rightwards as a whole by $\frac{1}{16}$ of the delay domain ( $\frac{1}{2}$ of one of the eight parts obtained by equally dividing the delay domain), the delay paths of the channel corresponding to the SRS port are distributed between the midpoint of the fifth part and an end point of the fifth part (a start point of a sixth part) in the delay domain equally divided into eight parts, which does not affect channel estimation performance of each SRS port.

Therefore, a value of $\beta_1$ may be $\frac{1}{2}$ . A communication apparatus that supports cyclic shift hopping may obtain, with reference to a first scale factor $\beta_1 = \frac{1}{2}$ that is predefined or indicated by the second communication apparatus by using the first information, that the cyclic shift range available to the SRS port configured with the cyclic shift index 1 is $\left[\frac{2\pi}{8}, \frac{3\pi}{8}\right]$ , and the cyclic shift range available to the SRS port configured with the cyclic shift index 5 is $\left[\frac{10\pi}{8}, \frac{11\pi}{8}\right]$ . In this way, it can be ensured that channel estimation performance of an SRS port that does not support cyclic shift hopping and an SRS port that supports cyclic shift hopping is not degraded, and an interference randomization effect brought by cyclic shift hopping can be fully utilized. It should be understood that, as shown in a second row and a third row in FIG. 5, the second communication apparatus may generate, in a similar manner, the first information that indicates the cyclic shift range of the SRS port that supports cyclic shift hopping. Details are not described herein again.

In Embodiment 1, the first information indicates the cyclic shift range of the first port, so that the cyclic shift range of the first port can be accurately determined.

Embodiment 2: The first information indicates a first set, the first set includes a cyclic shift index unavailable to the first port, and the cyclic shift range of the first port is determined by the first set.

Optionally, the first information indicates, through a bitmap, the cyclic shift index included in the first set, N bits in the bitmap are in one-to-one correspondence with N cyclic shift indexes, and that a value of any bit in the N bits is 1 or 0 indicates that a cyclic shift index corresponding to the any bit belongs to the first set. N is an integer greater than 1. N may be equal to a maximum cyclic shift quantity $n_{\mathrm{SRS}}^{\mathrm{cs,max}}$ , may be equal to a length $M_{ZC}$ of an SRS sequence, or may be another value. This is not limited in this application. For example, $B$ represents a bitmap occupying N bits, $B$ is used to indicate the cyclic shift index included in the first set, $j$ represents the cyclic shift index, $B(j)$ represents a value of a $(j+1)^{\mathrm{th}}$ bit in $B$, and $B(j)$ =1 indicates that a cyclic shift index corresponding to the $(j+1)^{\mathrm{th}}$ bit in $B$ belongs to the first set. The first information indicates, through a bitmap, the cyclic shift index included in the first set, so that the cyclic shift index included in the first set can be accurately indicated.

Example 21: The first information indicates a first set, that is, a cyclic shift index unavailable to the first port, and the cyclic shift range of the first port is $\bigcup_{j=0}^{n_{\mathrm{SRS}}^{\mathrm{cs,max}}-1}\left[2\pi \frac{j}{n_{\mathrm{SRS}}^{\mathrm{cs,max}}}, 2\pi \frac{j+\gamma}{n_{\mathrm{SRS}}^{\mathrm{cs,max}}}\right]$ , $s.t.B(j) = 0$. $\bigcup_{j=0}^{n_{\mathrm{SRS}}^{\mathrm{cs,max}}-1}\left[2\pi \frac{j}{n_{\mathrm{SRS}}^{\mathrm{cs,max}}}, 2\pi \frac{j+\gamma}{n_{\mathrm{SRS}}^{\mathrm{cs,max}}}\right]$ represents the cyclic shift range of the first port, $j$ represents the cyclic shift index, $n_{\mathrm{SRS}}^{\mathrm{cs,max}}$ represents the maximum cyclic shift quantity, $\gamma$ is a second scale factor, $B(j) = 1$ represents that the cyclic shift index $j$ is already occupied by an SRS port that does not support cyclic shift hopping, and $B(j) = 0$ represents that the cyclic shift index $j$ is not occupied by an SRS port that does not support cyclic shift hopping (which may be occupied by an SRS port that supports cyclic shift hopping, or may not be occupied by any SRS port). Optionally, $0 \leq \gamma \leq 1$ is the second scale factor that is predefined or indicated by the second communication apparatus (for example, a base station) by using the first information.

Example 22: The first information indicates a first set, that is, a cyclic shift index unavailable to the first port, and the cyclic shift range of the first port is $\bigcup_{j=0}^{n_{\mathrm{SRS}}^{\mathrm{cs,max}}-1}\left[2\pi \frac{j}{n_{\mathrm{SRS}}^{\mathrm{cs,max}}}, 2\pi \frac{j+1-\gamma B(j+1)}{n_{\mathrm{SRS}}^{\mathrm{cs,max}}}\right]$ , $s.t.B(j) = 0$. $\bigcup_{j=0}^{n_{\mathrm{SRS}}^{\mathrm{cs,max}}-1}\left[2\pi \frac{j}{n_{\mathrm{SRS}}^{\mathrm{cs,max}}}, 2\pi \frac{j+1-\gamma B(j+1)}{n_{\mathrm{SRS}}^{\mathrm{cs,max}}}\right]$ represents the cyclic shift range of the first port, j represents the cyclic shift index, $n_{\mathrm{SRS}}^{\mathrm{cs,max}}$ represents a maximum cyclic shift quantity, $\gamma$ is a second scale factor, $B(j) = 1$ represents that the cyclic shift value $j$ is already occupied by an SRS port that does not support cyclic shift hopping, and $B(j) = 0$ represents that the cyclic shift value $j$ is not occupied by an SRS port that does not support cyclic shift hopping (which may be occupied by an SRS port that supports cyclic shift hopping, or may not be occupied by any SRS port). Optionally, $0 \leq \gamma \leq 1$ is the second scale factor that is predefined or indicated by the second communication apparatus (for example, a base station) by using the first information.

In a possible implementation, the first information indicates a first set, a comb quantity $K_{\mathrm{TC}}$, and a second scale factor $\gamma$, the first set includes a cyclic shift index unavailable to the first port, and the cyclic shift range of the first port is jointly determined by the first set, the comb quantity, and the second scale factor. A possible implementation in which the first communication apparatus determines the cyclic shift range of the first port is as follows: The first communication apparatus determines a maximum cyclic shift quantity $n_{\mathrm{SRS}}^{\mathrm{cs,max}}$ based on the comb quantity $K_{\mathrm{TC}}$. Refer to Table 1; and determines the cyclic shift range of the first port based on the maximum cyclic shift quantity $n_{\mathrm{SRS}}^{\mathrm{cs,max}}$, the first set, and the second scale factor $\gamma$. Optionally, the first communication apparatus determines the cyclic shift range of the first port by using the foregoing formula (1) or formula (2). In this implementation, the cyclic shift range of the first port is jointly determined by the first set, the comb quantity, and the second scale factor, so that the cyclic shift range of the first port can be accurately determined.

For example $n_{\mathrm{SRS}}^{\mathrm{cs,max}} = 8$. When a value of $B$ is [0, 1, 0, 0, 0, 1, 0, 0], and $\gamma = \dfrac{1}{2}$, the cyclic shift range of the first port obtained based on the foregoing formula (1) is

$$\left[0, \frac{\pi}{8}\right] \cup \left[\frac{4\pi}{8}, \frac{5\pi}{8}\right] \cup \left[\frac{6\pi}{8}, \frac{7\pi}{8}\right] \cup \left[\frac{8\pi}{8}, \frac{9\pi}{8}\right] \cup \left[\frac{12\pi}{8}, \frac{13\pi}{8}\right] \cup \left[\frac{14\pi}{8}, \frac{15\pi}{8}\right]$$

, and the cyclic shift range of the first port obtained based on the foregoing formula (2) is $\left[0, \frac{\pi}{8}\right] \cup \left[\frac{4\pi}{8}, \frac{9\pi}{8}\right] \cup \left[\frac{12\pi}{8}, \frac{15\pi}{8}\right]$ .

FIG. 6 is a diagram of a delay domain channel corresponding to another SRS port according to an embodiment of this application. It is assumed that delay spreads of channels corresponding to SRS ports multiplexed on a same comb are approximately the same. Black vertical dashed lines equally divide a delay domain represented by a black horizontal solid line into eight parts (whose indexes are 0 to 7), a curve 601 represents a delay domain channel corresponding to an SRS port that does not support cyclic shift hopping, a solid curve 602 represents a delay domain channel corresponding to an SRS port that supports cyclic shift hopping when the SRS port does not perform cyclic shift hopping (that is, occupies a cyclic shift value configured by a base station), and a dashed curve 603 represents a delay domain channel corresponding to the SRS port that supports cyclic shift hopping after the SRS port performs cyclic shift hopping. An arrow represents a cyclic shift range available to the SRS port that supports cyclic shift hopping. It should be understood that, provided that a cyclic shift value of the SRS port that supports cyclic shift hopping is still within the range indicated by the arrow after the SRS port performs cyclic shift hopping, channel estimation performance of the SRS port that does not support cyclic shift hopping and the SRS port that supports cyclic shift hopping is not degraded.

The second communication apparatus indicates, by using the first information, a set of cyclic shift indexes that are already occupied by an SRS port that does not support cyclic shift hopping, that is, a first set. The first communication apparatus may obtain, with reference to a second scale factor $\gamma$ that is predefined or indicated by the second communication apparatus by using the first information, a cyclic shift range available to the first port, to fully utilize an interference randomization effect brought by cyclic shift hopping when ensuring that channel estimation performance of an SRS port that does not support cyclic shift hopping and an SRS port that supports cyclic shift hopping is not degraded.

In Embodiment 2, the first information indicates the first set, and the first communication apparatus may accurately determine the cyclic shift range of the first port based on the first set.

Embodiment 3: The first information indicates a second set, the second set includes one or more cyclic shift indexes, the second set is a proper subset of a universal set including all cyclic shift indexes, and the cyclic shift range of the first port is determined by the second set. Optionally, the universal set including all the cyclic shift indexes is divided into $\varepsilon$ predefined proper subsets, the second set is one of the $\varepsilon$ proper subsets, the first information indicates the second set, and the cyclic shift range of the first port is determined by the second set, where $\varepsilon$ is an integer greater than 1. The second set indicated by the first information is one of several predefined proper subsets, and the cyclic shift range of the first port may be determined with relatively small overheads.

Optionally, the first information indicates, through a bitmap, the cyclic shift index included in the second set, N bits in the bitmap are in one-to-one correspondence with N cyclic shift indexes, and that a value of any bit in the N bits is 1 or 0 indicates that a cyclic shift index corresponding to the any bit belongs to the second set. N is an integer greater than 1. N may be equal to a maximum cyclic shift quantity $n_{\mathrm{SRS}}^{\mathrm{cs,max}}$, may be equal to a length $M_{\mathrm{ZC}}$ of an SRS sequence, or may be another value. This is not limited in this application. For example, B represents a bitmap occupying N bits, $B$ is used to indicate a cyclic shift value included in the second set, $j$ represents the cyclic shift index, $B(j)$ represents a value of a $(j+1)^{\mathrm{th}}$

bit in *B,* and *B(j)*=1 indicates that a cyclic shift index corresponding to the *(j+1)*th bit in *B* belongs to the second set. The first information indicates, through a bitmap, the cyclic shift index included in the second set, so that the cyclic shift index included in the first set can be accurately indicated.

Example 3: The first information indicates a second set, the second set includes one or more cyclic shift indexes, and the cyclic shift range of the first port is $\bigcup_k \left[2\pi \frac{k}{n_{\mathrm{SRS}}^{\mathrm{cs,max}}}, 2\pi \frac{k+\delta}{n_{\mathrm{SRS}}^{\mathrm{cs,max}}}\right]_{,s.t.k \subset R.}$ $\bigcup_k \left[2\pi \frac{k}{n_{\mathrm{SRS}}^{\mathrm{cs,max}}}, 2\pi \frac{k+\delta}{n_{\mathrm{SRS}}^{\mathrm{cs,max}}}\right]$ represents the cyclic shift range of the first port, *R* represents the second set, *k* represents the cyclic shift index included in the second set, $n_{\mathrm{SRS}}^{\mathrm{cs,max}}$ represents the maximum cyclic shift quantity, and δ represents a third scale factor. Optionally, $0 \leq \delta \leq 1$ is the third scale factor that is predefined or indicated by the second communication apparatus (for example, a base station) by using the first information.

In a possible implementation, the first information indicates a second set, a comb quantity $K_{\mathrm{TC}}$, and a third scale factor δ, the second set includes one or more cyclic shift indexes, the second set is a proper subset of a universal set including all cyclic shift indexes, and the cyclic shift range of the first port is jointly determined by the second set, the comb quantity, and the third scale factor. A possible implementation in which the first communication apparatus determines the cyclic shift range of the first port is as follows: The first communication apparatus determines a maximum cyclic shift quantity $n_{\mathrm{SRS}}^{\mathrm{cs,max}}$ based on the comb quantity $K_{\mathrm{TC}}$. Refer to Table 1; and determines the cyclic shift range of the first port based on the maximum cyclic shift quantity $n_{\mathrm{SRS}}^{\mathrm{cs,max}}$, the second set, and the third scale factor δ. Optionally, the first communication apparatus determines the cyclic shift range of the first port by using the foregoing formula (3). In this implementation, the cyclic shift range of the first port is jointly determined by the second set, the comb quantity, and the third scale factor, so that the cyclic shift range of the first port can be accurately determined.

Considering that cyclic shift indexes occupied by several SRS ports that belong to an SRS resource are evenly distributed in an existing protocol, the universal set including all the cyclic shift indexes may be equally divided into $\varepsilon_1$ predefined subsets at intervals of $\varepsilon_1$, where $\varepsilon_1$ is a divisor of $n_{\mathrm{SRS}}^{\mathrm{cs,max}}$. Considering that a delay difference exists between SRSs used by different TRPs to perform channel estimation, the universal set including all the cyclic shift indexes may be consecutively and equally divided into $\varepsilon_2$ predefined subsets, where $\varepsilon_2$ is a divisor of $n_{\mathrm{SRS}}^{\mathrm{cs,max}}$. The universal set including all the cyclic shift indexes may alternatively be divided into several predefined subsets in another manner. This is not limited in this embodiment of this application.

For example, $n_{\mathrm{SRS}}^{\mathrm{cs,max}} = 8$. When the universal set including all the cyclic shift indexes is divided into two predefined subsets {0, 2, 4, 6} and {1, 3, 5, 7}, the second communication apparatus may indicate, by using the first information, that the second set is {0, 2, 4, 6} or {1, 3, 5, 7}. For example, a second field in the first information indicates the second set. If a value of the second field is 0, the second field indicates that the second set is {0, 2, 4, 6}; or if a value of the second field is 1, the second field indicates that the second set is {1, 3, 5, 7}. When the universal set including all the cyclic shift indexes is divided into two predefined sets {0, 1, 2, 3} and {4, 5, 6, 7}, the second communication apparatus may indicate, by using the first information, that the second set is {0, 1, 2, 3} or {4, 5, 6, 7}. When the universal set including all the cyclic shift indexes is divided into four predefined subsets {0, 4}, {1, 5}, {2, 6}, and {3, 7}, the second communication apparatus may indicate, by using the first information, that the second set is any one of {0, 4}, {1, 5}, {2, 6}, and {3, 7}. For example, the second field in the first information indicates the second set. If a value of the second field is 00, the second field indicates that the second set is {0, 4}; if a value of the second field is 01, the second field indicates that the second set is {1, 5}; if a value of the second field is 10, the second field indicates that the second set is {2,6}; or if a value of the second field is 11, the second field indicates that the second set is {3, 7}. Further, for example, the second set is {0, 2, 4, 6}, and $\delta = \frac{1}{2}$. In this case, the cyclic shift range of the first port is $\left[0, \frac{\pi}{8}\right] \cup \left[\frac{4\pi}{8}, \frac{5\pi}{8}\right] \cup \left[\frac{8\pi}{8}, \frac{9\pi}{8}\right] \cup \left[\frac{12\pi}{8}, \frac{13\pi}{8}\right]$.

The second communication apparatus indicates, by using the first information, a set of cyclic shift indexes that are not occupied by an SRS port that does not support cyclic shift hopping, that is, the second set. The first communication apparatus may obtain, with reference to a third scale factor δ that is predefined or indicated by the second communication apparatus by using the first information, the cyclic shift range available to the first port, to fully utilize an interference randomization effect brought by cyclic shift hopping when ensuring that channel estimation performance of an SRS port that does not support cyclic shift hopping and an SRS port that supports cyclic shift hopping is not degraded.

In Embodiment 3, the first information indicates the second set, and the first communication apparatus may accurately determine the cyclic shift range of the first port based on the second set.

There are the following two possible implementations of cyclic shift hopping: In a possible implementation, a cyclic shift of an SRS is determined by the foregoing formula (10), and in this implementation, the cyclic shift of the SRS does not follow a cyclic shift change pattern. In another possible implementation, cyclic shifts of an SRS at different moments follow a cyclic shift change pattern.

The foregoing describes a communication solution that is used when cyclic shift hopping does not follow a cyclic shift change pattern and in which an interference randomization effect brought by cyclic shift hopping is fully utilized when ensuring that channel estimation performance of SRS ports multiplexed on a same comb is not degraded. The following describes a communication solution that is used when cyclic shift hopping follows a cyclic shift change pattern and in which an interference randomization effect brought by cyclic shift hopping is fully utilized when ensuring that channel estimation performance of SRS ports multiplexed on a same comb is not degraded.

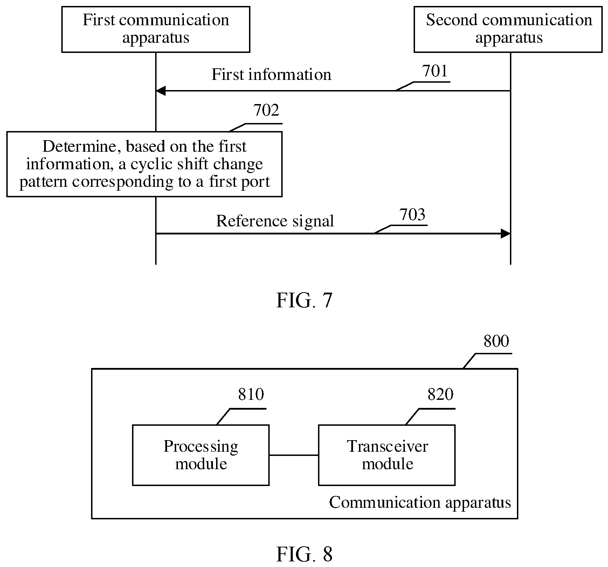

FIG. 7 is a flowchart of another communication interaction method according to an embodiment of this application. As shown in FIG. 7, the method includes the following steps.

701: A second communication apparatus sends first information to a first communication apparatus.

Correspondingly, the first communication apparatus receives the first information from the second communication apparatus. The second communication apparatus may be an access network device, for example, a base station. The first communication apparatus is a terminal device. The first information is used to indicate a cyclic shift change pattern corresponding to the first port. The first port is one of ports corresponding to the first communication apparatus. The first port may be one of several SRS ports included in an SRS resource in an SRS resource set. In this embodiment of this application, the first port is used as an example to describe a procedure in which the first communication apparatus determines the cyclic shift range of the SRS port. It should be understood that the first communication apparatus may determine a cyclic shift range of any SRS port in a similar manner.

The first information may be carried on one or more pieces of signaling in a same format/different formats, for example, radio resource control (radio resource control, RRC) signaling, a media access control (media access control, MAC) control element (control element, CE), downlink control information (downlink control information, DCI), or the like.

The second communication apparatus generates the first information before sending the first information. The first information is used by the first communication apparatus to determine the cyclic shift change pattern corresponding to the first port. Optionally, the second communication apparatus generates the first information based on occupation of a cyclic shift index by an SRS port that does not support cyclic shift hopping and/or occupation of a cyclic shift index by an SRS port that supports cyclic shift hopping and/or a delay spread of a channel corresponding to an SRS port that supports cyclic shift hopping.

702: The first communication apparatus determines, based on the first information, the cyclic shift change pattern corresponding to the first port.

A set including cyclic shift indexes included in the cyclic shift change pattern corresponding to the first port is a proper subset of a universal set including all cyclic shift indexes. The universal set including all the cyclic shift indexes may be $\left\{0, 1, \cdots, c \cdot n_{\mathrm{SRS}}^{\mathrm{cs,max}} - 1\right\}$, may be $\{0, 1, \cdots, M_{\mathrm{ZC}} - 1\}$, or may include another value, where c represents a positive integer constant, $n_{\mathrm{SRS}}^{\mathrm{cs,max}}$ represents a maximum cyclic shift quantity, and $M_{\mathrm{ZC}}$ represents a length of an SRS sequence.

703: The first communication apparatus sends a reference signal on the first port.

That the first communication apparatus sends a reference signal on the first port may be as follows: The first communication apparatus sends the reference signal on the first port, where a cyclic shift value occupied by the first port changes with a sending moment and/or a sending frequency of the reference signal based on the cyclic shift change pattern corresponding to the first port.

Optionally, a first field in the first information indicates the cyclic shift change pattern corresponding to the first port, and a quantity of bits occupied by the first field is related to a quantity of candidate cyclic shift change patterns. Cyclic shift change patterns (for example, {0, 2, 4, 6} and {4, 6, 0, 2}) that include same cyclic shift indexes in different sequences may be considered as different cyclic shift change patterns, or may be considered as same cyclic shift change patterns at different start points. The start point may be a cyclic shift index configured by the second communication apparatus for the first port, or may be determined in another manner. In the following, cyclic shift change patterns that include same cyclic shift indexes in different sequences are considered as same cyclic shift change patterns at different start points, and the start point is a cyclic shift index configured by the second communication apparatus for the first port.

Considering that cyclic shift indexes occupied by several SRS ports that belong to an SRS resource are evenly distributed in an existing protocol, the universal set including all the cyclic shift indexes may be equally divided into $\varepsilon_1$ cyclic shift change patterns at intervals of $\varepsilon_1$, where $\varepsilon_1$ is a divisor of $n_{\mathrm{SRS}}^{\mathrm{cs,max}}$. Considering that a delay difference exists between SRSs used by different TRPs to perform channel estimation, the universal set including all the cyclic shift indexes may be consecutively and equally divided into $\varepsilon_2$ cyclic shift change patterns, where $\varepsilon_2$ is a divisor of $n_{\mathrm{SRS}}^{\mathrm{cs,max}}$. The universal set including all the cyclic shift indexes may alternatively be divided into several cyclic shift change patterns in another manner. This is not limited in this embodiment of this application.

For example, $n_{\mathrm{SRS}}^{\mathrm{cs,max}} = 8$. When the universal set including all the cyclic shift indexes is divided into two cyclic shift change patterns {0, 2, 4, 6} and {1, 3, 5, 7}, the second communication apparatus may indicate, by using the first information, that a cyclic shift change pattern corresponding to an SRS port (for example, the first port) that supports cyclic shift hopping is {0, 2, 4, 6} or {1, 3, 5, 7}. When the universal set including all the cyclic shift indexes is divided into two cyclic shift change patterns {0,1, 2, 3} and {4, 5, 6, 7}, the second communication apparatus may indicate, by using the first information, that a cyclic shift change pattern corresponding to an SRS port that supports cyclic shift hopping is {0,1, 2, 3} or {4, 5, 6, 7}. For example, the first field in the first information indicates the cyclic shift change pattern corresponding to the first port. If a value of the first field is 0, the first field indicates that the cyclic shift change pattern corresponding to the SRS port that supports cyclic shift hopping is {0, 1, 2, 3}; or if a value of the first field is 1, the first field indicates that the cyclic shift change pattern corresponding to the SRS port that supports cyclic shift hopping is {4, 5, 6, 7}. When the universal set including all the cyclic shift values is divided into four cyclic shift change patterns {0, 4}, {1, 5}, {2, 6}, and {3, 7}, the second communication apparatus may indicate, by using the first information, that a cyclic shift change pattern corresponding to an SRS port that supports cyclic shift hopping is any one of {0, 4}, {1, 5}, {2, 6}, and {3, 7}. For example, the first field in the first information indicates the cyclic shift change pattern corresponding to the first port. If a value of the first field is 00, the first field indicates that the cyclic shift change pattern corresponding to the SRS port that supports cyclic shift hopping is {0, 4}; or if a value of the first field is 01, the first field indicates that the cyclic shift change pattern corresponding to the SRS port that supports cyclic shift hopping is {1, 5}; if a value of the first field is 10, the first field indicates that the cyclic shift change pattern corresponding to the SRS port that supports cyclic shift hopping is {2,6}; or if a value of the first field is 11, the first field indicates that the cyclic shift change pattern corresponding to the SRS port that supports cyclic shift hopping is {3, 7}. Further, for example, the first information indicates that a cyclic shift change pattern corresponding to an SRS port $p_i$ that supports cyclic shift hopping is {0, 2, 4, 6}, and a cyclic shift index configured for the SRS port $p_i$ by the second communication apparatus is 4. In this case, the cyclic shift change pattern corresponding to the SRS port $p_i$ is {4, 6, 0, 2}, that is, a cyclic shift index occupied by the SRS port $p_i$ changes with a sending moment and/or a sending frequency of an SRS based on a rule of 4, 6, 0, 2, 4, 6, 0, 2, ⋯.

In this embodiment of this application, the first communication apparatus determines, based on the first information, the cyclic shift change pattern corresponding to the first port. When the first communication apparatus sends the reference signal based on the cyclic shift change pattern, the following problem can be avoided or mitigated: when an SRS port corresponding to a terminal device that supports cyclic shift hopping and an SRS port corresponding to a terminal device that does not support cyclic shift hopping are configured on a same comb for multiplexing, channel estimation performance of the two terminal devices may be severely degraded. In other words, the first communication apparatus determines, based on the first information, the cyclic shift change pattern corresponding to the first port, to ensure that channel estimation performance is not degraded when fully utilizing an interference randomization effect brought by cyclic shift hopping.

The following describes, with reference to the accompanying drawings, structures of communication apparatuses that can implement the communication methods provided in embodiments of this application.

FIG. 8 is a diagram of a structure of a communication apparatus 800 according to an embodiment of this application. The communication apparatus 800 may correspondingly implement functions or steps implemented by the first communication apparatus in the foregoing method embodiments, or may correspondingly implement functions or steps implemented by the second communication apparatus in the foregoing method embodiments. The communication apparatus 800 may include a processing module 810 and a transceiver module 820. Optionally, the communication apparatus may further include a storage unit. The storage unit may be configured to store instructions (code or a program) and/or data. The processing module 810 and the transceiver module 820 may be coupled to the storage unit. For example, the processing module 810 may read the instructions (the code or the program) and/or the data in the storage unit, to implement a corresponding method. The foregoing units may be disposed independently, or may be partially or completely integrated. For example, the transceiver module 820 may include a sending module and a receiving module. The sending module may be a transmitter, and the receiving module may be a receiver. An entity corresponding to the transceiver module 820 may be a transceiver, or may be a communication interface.

In some possible implementations, the communication apparatus 800 can correspondingly implement behavior and functions of the first communication apparatus in the foregoing method embodiments. For example, the communication apparatus 800 may be the first communication apparatus, or may be a component (for example, a chip or a circuit) used in the first communication apparatus. For example, the transceiver module 820 may be configured to perform all receiving or sending operations performed by the first communication apparatus in the embodiments in FIG. 4 and FIG. 7, for example, step 401 and step 403 in the embodiment shown in FIG. 4, step 701 and step 703 in the embodiment shown in FIG. 7, and/or another process used to support the technology described in this specification. The processing module 810 is configured to perform all operations, other than the receiving and sending operations, performed by the first communication apparatus in the embodiments shown in FIG. 4 and FIG. 7, for example, step 402 in the embodiment shown in FIG. 4 and step 702 in the embodiment shown in FIG. 7.

In some possible implementations, the communication apparatus 800 can correspondingly implement behavior and functions of the second communication apparatus in the foregoing method embodiments. For example, the communication apparatus 800 may be the second communication apparatus, or may be a component (for example, a chip or a circuit) used in the second communication apparatus. For example, the transceiver module 820 may be configured to perform all receiving or sending operations performed by the second communication apparatus in the embodiments in FIG. 4 and FIG. 7, for example, step 401 and step 403 in the embodiment shown in FIG. 4, step 701 and step 703 in the embodiment shown in FIG. 7, and/or another process used to support the technology described in this specification. The processing module 810 is configured to perform all operations, other than the sending and receiving operations, performed by the second communication apparatus, for example, an operation of generating first information.

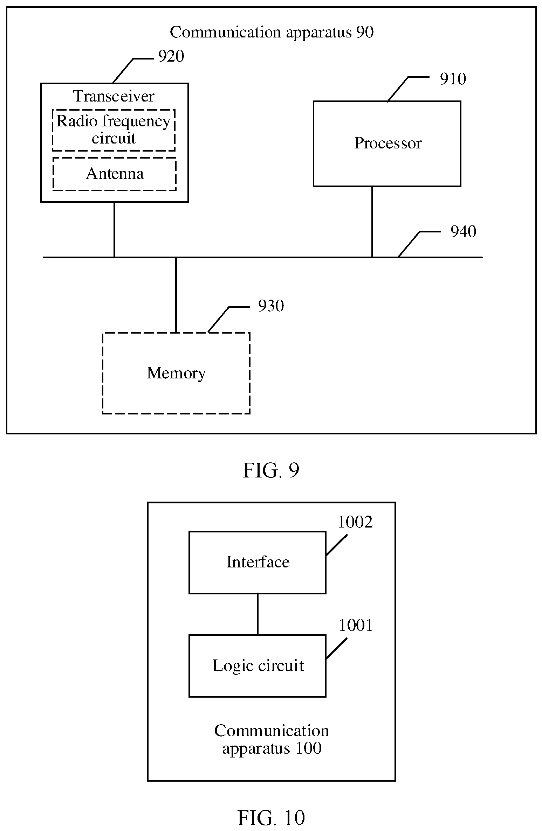

FIG. 9 is a diagram of a structure of another communication apparatus 90 according to an embodiment of this application. The communication apparatus in FIG. 9 may be the foregoing first communication apparatus, or may be the foregoing second communication apparatus.

As shown in FIG. 9, the communication apparatus 90 includes at least one processor 910 and a transceiver 920.

In some embodiments of this application, the processor 910 and the transceiver 920 may be configured to perform functions, operations, or the like performed by the first communication apparatus. For example, the transceiver 920 performs all receiving or sending operations performed by the first communication apparatus in the embodiments in FIG. 4 and FIG. 7. For example, the processor 910 is configured to perform all operations, other than the sending and receiving operations, performed by the first communication apparatus in the embodiments in FIG. 4 and FIG. 7.

In some embodiments of this application, the processor 910 and the transceiver 920 may be configured to perform functions, operations, or the like performed by the second communication apparatus. For example, the transceiver 920 performs all receiving or sending operations performed by the second communication apparatus in the embodiments in FIG. 4 and FIG. 7. For example, the processor 910 is configured to perform all operations, other than the sending and receiving operations, performed by the second communication apparatus in the embodiments in FIG. 4 and FIG. 7.

The transceiver 920 is configured to communicate with another device/apparatus through a transmission medium. The processor 910 receives and sends data and/or signaling by using the transceiver 920, and is configured to implement the method in the foregoing method embodiment. The processor 910 may implement a function of the processing model 810, and the transceiver 920 may implement a function of the transceiver module 820.

Optionally, the transceiver 920 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. An input/output apparatus, such as a touchscreen, a display, or a keyboard, is mainly configured to receive data input by a user and output data to the user.

Optionally, the communication apparatus 90 may further include at least one memory 930, configured to store program instructions and/or data. The memory 930 is coupled to the processor 910. The coupling in this embodiment of this application may be an indirect coupling or a communication connection between apparatuses, units, or modules in an electrical form, a mechanical form, or another form, and is used for information exchange between the apparatuses, the units, or the modules. The processor 910 may operate cooperatively with the memory 930. The processor 910 may execute the program instructions stored in the memory 930. At least one of the at least one memory may be included in the processor.

After the communication apparatus 90 is powered on, the processor 910 may read a software program in the memory 930, interpret and execute instructions in the software program, and process data in the software program. When data needs to be sent wirelessly, the processor 910 performs baseband processing on the to-be-sent data, and then outputs a baseband signal to the radio frequency circuit. The radio frequency circuit performs radio frequency processing on the baseband signal, and then sends a radio frequency signal to the outside in a form of an electromagnetic wave by using the antenna. When data is sent to the communication apparatus, the radio frequency circuit receives a radio frequency signal by using the antenna, converts the radio frequency signal into a baseband signal, and outputs the baseband signal to the processor 910. The processor 910 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In this embodiment of this application, a specific connection medium between the transceiver 920, the processor 910, and the memory 930 is not limited. In this embodiment of this application, in FIG. 9, the memory 930, the processor 910, and the transceiver 920 are connected to each other through a bus 940. The bus is represented by using a thick line in FIG. 9. A manner of connection between other components is merely an example for description, and constitutes no limitation. The bus may be classified into an address bus, a data bus, a control bus, and the like. For ease of representation, only one thick line is used to represent the bus in FIG. 9, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps in the methods disclosed with reference to embodiments of this application may be directly performed and completed by a hardware processor, or may be performed and completed by using a combination of hardware in the processor and a software module.

FIG. 10 is a diagram of a structure of another communication apparatus 100 according to an embodiment of this application. As shown in FIG. 10, the communication apparatus shown in FIG. 10 includes a logic circuit 1001 and an interface 1002. The processing module 810 in FIG. 8 may be implemented by using the logic circuit 1001, and the transceiver module 820 in FIG. 8 may be implemented by using the interface 1002. The logic circuit 1001 may be a chip, a processing circuit, an integrated circuit, a system on chip (system on chip, SoC), or the like. The interface 1002 may be a communication interface, an input/output interface, or the like. In this embodiment of this application, the logic circuit and the interface may further be coupled to each other. A specific manner of connection between the logic circuit and the interface is not limited in this embodiment of this application.

In some embodiments of this application, the logic circuit and the interface may be configured to perform functions, operations, or the like performed by the first communication apparatus.

In some embodiments of this application, the logic circuit and the interface may be configured to perform functions, operations, or the like performed by the second communication apparatus.

This application further provides a computer-readable storage medium. The computer-readable storage medium stores a computer program or instructions. When the computer program or the instructions are run on a computer, the computer is enabled to perform the method in the foregoing embodiment.

This application further provides a computer program product. The computer program product includes instructions or a computer program. When the instructions or the computer program is run on a computer, the method in the foregoing embodiment is performed.

This application further provides a communication system, including the foregoing first communication apparatus and the foregoing second communication apparatus.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving, by a first communication apparatus, first information;
   determining, by the first communication apparatus, a cyclic shift range of a first port based on the first information, wherein the first port is one of ports corresponding to the first communication apparatus, and the cyclic shift range of the first port comprises two or more cyclic shift values; and
   sending, by the first communication apparatus, a reference signal on the first port, wherein a cyclic shift value occupied by the first port changes with a sending moment and/or a sending frequency of the reference signal, and the cyclic shift value occupied by the first port belongs to the cyclic shift range of the first port.

2. The method according to claim 1, wherein the first information indicates a first interval length, and the cyclic shift range of the first port is jointly determined by a cyclic shift value configured for the first port and the first interval length.

3. The method according to claim 1, wherein the first information indicates a first set, the first set comprises a cyclic shift index unavailable to the first port, or the first set comprises a cyclic shift index available to the first port, and the cyclic shift range of the first port is determined by the first set.

4. The method according to claim 3, wherein the first information indicates, through a bitmap, the cyclic shift index comprised in the first set, N bits in the bitmap are in one-to-one correspondence with N cyclic shift indexes, and that a value of any bit in the N bits is 1 or 0 indicates that a cyclic shift index corresponding to the any bit belongs to the first set.

5. The method according to claim 1, wherein the first information indicates a second set, the second set comprises one or more cyclic shift indexes, the second set is a subset of a universal set comprising all cyclic shift indexes, and the cyclic shift range of the first port is determined by the second set.

6. The method according to claim 5, wherein that the cyclic shift range of the first port is determined by the second set comprises: the cyclic shift range of the first port comprises a cyclic shift value corresponding to a cyclic shift index in the second set.

7. A communication method, comprising:

   receiving, by a first communication apparatus, first information;
   determining, by the first communication apparatus based on the first information, a cyclic shift change pattern corresponding to a first port, wherein the first port is one of ports corresponding to the first communication apparatus, and a set comprising cyclic shift indexes comprised in the cyclic shift change pattern corresponding to the first port is a proper subset of a universal set comprising all cyclic shift indexes; and
   sending, by the first communication apparatus, a reference signal on the first port, wherein a cyclic shift value occupied by the first port changes with a sending moment and/or a sending frequency of the reference signal, and the cyclic shift change pattern corresponding to the first port is used to represent a relationship between the cyclic shift value occupied by the first port and the sending moment and/or the sending frequency of the reference signal.

8. A communication method, comprising:

   generating first information;
   sending the first information, wherein the first information is used to indicate a cyclic shift range of a first port, the first port is one of ports corresponding to a first communication apparatus, and the cyclic shift range of the first port comprises two or more cyclic shift values; and
   receiving a reference signal on the first port, wherein a cyclic shift value occupied by the first port changes with a sending moment and/or a sending frequency of the reference signal, and the cyclic shift value occupied by the first port belongs to the cyclic shift range of the first port.

9. The method according to claim 8, wherein the first information indicates a first interval length, and the cyclic shift range of the first port is jointly determined by a cyclic shift value configured for the first port and the first interval length.

10. The method according to claim 8, wherein the first information is used to indicate a first set, the first set comprises a cyclic shift index unavailable to the first port, or the first set comprises a cyclic shift index available to the first port, and the cyclic shift range of the first port is determined by the first set.

11. The method according to claim 10, wherein the first information indicates, through a bitmap, the cyclic shift index comprised in the first set, N bits in the bitmap are in one-to-one correspondence with N cyclic shift indexes, and that a value of any bit in the N bits is 1 or 0 indicates that a cyclic shift index corresponding to the any bit belongs to the first set.

12. The method according to claim 8, wherein the first information is used to indicate a second set, the second set comprises one or more cyclic shift indexes, the second set is a proper subset of a universal set comprising all cyclic shift indexes, and the cyclic shift range of the first port is determined by the second set.

13. The method according to claim 12, wherein that the cyclic shift range of the first port is determined by the second set comprises: the cyclic shift range of the first port comprises a cyclic shift value corresponding to a cyclic shift index in the second set.

14. A communication method, comprising:

   generating first information;
   sending the first information, wherein the first information is used to indicate a cyclic shift change pattern corresponding to a first port, the first port is one of ports corresponding to a first communication apparatus, and a set comprising cyclic shift indexes comprised in the cyclic shift change pattern corresponding to the first port is a proper subset of a universal set comprising all cyclic shift indexes; and

receiving a reference signal on the first port, wherein a cyclic shift value occupied by the first port changes with a sending moment and/or a sending frequency of the reference signal, and the cyclic shift change pattern corresponding to the first port is used to represent a relationship between the cyclic shift value occupied by the first port and the sending moment and/or the sending frequency of the reference signal.

15. A communication apparatus, comprising a module or a unit configured to implement the method according to any one of claims 1 to 6.

16. A communication apparatus, comprising a module or a unit configured to implement the method according to claim 7.

17. A communication apparatus, comprising a module or a unit configured to implement the method according to any one of claims 8 to 13.

18. A communication apparatus, comprising a module or a unit configured to implement the method according to claim 14.

19. A computer-readable storage medium, wherein the computer-readable storage medium stores a computer program, the computer program comprises program instructions, and when the program instructions are executed, a computer is enabled to perform the method according to any one of claims 1 to 6; or when the program instructions are executed, a computer is enabled to perform the method according to claim 7; or when the program instructions are executed, a computer is enabled to perform the method according to any one of claims 8 to 13; or when the program instructions are executed, a computer is enabled to perform the method according to claim 14.

20. A communication apparatus, comprising a processor, wherein the processor is configured to: when executing instructions, enable the communication apparatus to perform the method according to any one of claims 1 to 6, or enable the communication apparatus to perform the method according to claim 7, or enable the communication apparatus to perform the method according to any one of claims 8 to 13, or enable the communication apparatus to perform the method according to claim 14.

21. The apparatus according to claim 20, wherein the apparatus further comprises a memory, and the memory is configured to store the instructions.

22. A chip, wherein the chip comprises a processor and a communication interface, and the processor reads, by using the communication interface, instructions stored in a memory, to perform the method according to any one of claims 1 to 6, or perform the method according to claim 7, or perform the method according to any one of claims 8 to 13, or perform the method according to claim 14.

23. A communication method, comprising:

receiving, by a first communication apparatus, first information;
determining, by the first communication apparatus, a cyclic shift range of a first port based on the first information, wherein the first port is one of ports corresponding to the first communication apparatus, and the cyclic shift range of the first port comprises one or more cyclic shift values; and
sending, by the first communication apparatus, a reference signal on the first port, wherein a cyclic shift value occupied by the first port changes with a sending moment and/or a sending frequency of the reference signal, and the cyclic shift value occupied by the first port belongs to the cyclic shift range of the first port.

24. The method according to claim 23, wherein the first information indicates a first set, the first set comprises a cyclic shift index unavailable to the first port, or the first set comprises a cyclic shift index available to the first port, and the cyclic shift range of the first port is determined by the first set.

25. The method according to claim 24, wherein the first information indicates, through a bitmap, the cyclic shift index comprised in the first set, N bits in the bitmap are in one-to-one correspondence with N cyclic shift indexes, and that a value of any bit in the N bits is 1 or 0 indicates that a cyclic shift index corresponding to the any bit belongs to the first set.

26. A communication method, comprising:

generating first information;
sending the first information, wherein the first information is used to indicate a cyclic shift range of a first port, the first port is one of ports corresponding to a first communication apparatus, and the cyclic shift range of the first port comprises one or more cyclic shift values; and

receiving a reference signal on the first port, wherein a cyclic shift value occupied by the first port changes with a sending moment and/or a sending frequency of the reference signal, and the cyclic shift value occupied by the first port belongs to the cyclic shift range of the first port.

27. The method according to claim 26, wherein the first information indicates a first set, the first set comprises a cyclic shift index unavailable to the first port, or the first set comprises a cyclic shift index available to the first port, and the cyclic shift range of the first port is determined by the first set.

28. The method according to claim 27, wherein the first information indicates, through a bitmap, the cyclic shift index comprised in the first set, N bits in the bitmap are in one-to-one correspondence with N cyclic shift indexes, and that a value of any bit in the N bits is 1 or 0 indicates that a cyclic shift index corresponding to the any bit belongs to the first set.

FIG. 1

FIG. 2

Access network
device

Terminal
device

Terminal
device

FIG. 3

FIG. 4

FIG. 5

FIG. 6

First communication apparatus

Second communication apparatus

First information 701

702

Determine, based on the first information, a cyclic shift change pattern corresponding to a first port

Reference signal 703

FIG. 7

800

810 820

Processing module

Transceiver module

Communication apparatus

FIG. 8

Communication apparatus 90

920

Transceiver

Radio frequency
circuit

Antenna

910

Processor

940

930

Memory

FIG. 9

1002

Interface

1001

Logic circuit

Communication
apparatus 100

FIG. 10

## INTERNATIONAL SEARCH REPORT

| International application No. |
|---|
| **PCT/CN2023/121809** |

| A. | CLASSIFICATION OF SUBJECT MATTER |
|---|---|

H04L1/00(2006.01)i

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT; ENTXTC; ENTXT; DWPI; CNKI; IEEE; 3GPP: 循环移位, 信道探测参考信号, 发送, 时刻, 时间, 频率, 接入网, 基站, 上行, 下行, 序列, 干扰, 差, 信道, 梳状, 端口, port, comb, reference, signal, SRS, uplink, UL, downlink, LTE, cyclic, shift, CS, send+, sequence

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021046948 A1 (HUAWEI TECHNOLOGIES CO., LTD.) 18 March 2021 (2021-03-18) description, pages 23-35 | 1-28 |
| A | CN 111865524 A (HUAWEI TECHNOLOGIES CO., LTD.) 30 October 2020 (2020-10-30) entire document | 1-28 |
| A | CN 105792375 A (BEIJING XINWEI TELECOM TECHNOLOGY, INC.) 20 July 2016 (2016-07-20) entire document | 1-28 |
| A | US 2012163318 A1 (NTT DOCOMO, INC.) 28 June 2012 (2012-06-28) entire document | 1-28 |
| A | SHARP. "R1-110278 "Remaining Issues on Dynamic Aperiodic SRS Signaling"" *3GPP TSG RAN WG1 Meeting #63bis Dublin, Ireland, January 17-21, 2011,* No. TSGR1_63b, 21 January 2011 (2011-01-21), entire document | 1-28 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 December 2023** | **21 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| WO | 2021046948 | A1 | 18 March 2021 | WO | 2021046823 | A1 | 18 March 2021 |
|  |  |  |  | CN | 114287123 | A | 05 April 2022 |
| CN | 111865524 | A | 30 October 2020 | WO | 2020221081 | A1 | 05 November 2020 |
| CN | 105792375 | A | 20 July 2016 | WO | 2016101923 | A1 | 30 June 2016 |
| US | 2012163318 | A1 | 28 June 2012 | EP | 2448162 | A1 | 02 May 2012 |
|  |  |  |  | EP | 2448162 | A4 | 21 January 2015 |
|  |  |  |  | WO | 2010150806 | A1 | 29 December 2010 |
|  |  |  |  | CL | 2011003243 | A1 | 20 July 2012 |
|  |  |  |  | KR | 20120025547 | A | 15 March 2012 |
|  |  |  |  | KR | 101345312 | B1 | 15 January 2014 |
|  |  |  |  | RU | 2012101078 | A | 27 July 2013 |
|  |  |  |  | RU | 2510137 | C2 | 20 March 2014 |
|  |  |  |  | CA | 2765255 | A1 | 29 December 2010 |
|  |  |  |  | CA | 2765255 | C | 26 August 2014 |
|  |  |  |  | JP | 2011160396 | A | 18 August 2011 |
|  |  |  |  | JP | 5203409 | B2 | 05 June 2013 |
|  |  |  |  | US | 9048912 | B2 | 02 June 2015 |
|  |  |  |  | AU | 2010263607 | A1 | 19 January 2012 |
|  |  |  |  | AU | 2010263607 | B2 | 06 February 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211213854